(19) Europäisches Patentamt
European Patent Office
Office européen des brevets

(11) **EP 1 525 707 B1**

(12) **FASCICULE DE BREVET EUROPEEN**

(45) Date de publication et mention
de la délivrance du brevet:
**03.10.2012 Bulletin 2012/40**

(21) Numéro de dépôt: **03755619.8**

(22) Date de dépôt: **21.07.2003**

(51) Int Cl.:
***H04L 9/12*** *(2006.01)*

(86) Numéro de dépôt international:
**PCT/FR2003/002302**

(87) Numéro de publication internationale:
**WO 2004/014019 (12.02.2004 Gazette 2004/07)**

(54) **PROCEDE DE TRANSMISSION DE DONNEES CHIFFREES, PROCEDE DE DECHIFFREMENT ASSOCIE, DISPOSITIFS POUR LEUR MISE EN OEUVRE, ET TERMINAL MOBILE LES INCORPORANT**

VERFAHREN ZUR ÜBERTRAGUNG VON VERSCHLÜSSELTEN DATEN, ZUGEHÖRIGES ENTSCHLÜSSELUNGSVERFAHREN, VORRICHTUNG ZU DEREN AUSFÜHRUNG UND MOBILES ENDGERÄT WELCHES DIESES ENTHÄLT

METHOD FOR TRANSMITTING ENCRYPTED DATA, ASSOCIATED DECRYPTING METHOD, DEVICE FOR CARRYING OUT SAID METHODS AND A MOBILE TERMINAL FOR THE INCORPORATION THEREOF

(84) Etats contractants désignés:
**AT BE BG CH CY CZ DE DK EE ES FI FR GB GR HU IE IT LI LU MC NL PT RO SE SI SK TR**

(30) Priorité: **30.07.2002 FR 0209668**

(43) Date de publication de la demande:
**27.04.2005 Bulletin 2005/17**

(73) Titulaire: **EADS Secure Networks**
**78990 Elancourt (FR)**

(72) Inventeur: **MARQUE-PUCHEU, Gerard**
**F-78480 Verneuil-sur-Seine (FR)**

(56) Documents cités:
**EP-A- 0 446 194**

**Description**

La présente invention se rapporte au domaine des systèmes de radiocommunications numériques et, en particulier, des systèmes de type TDMA (de l'anglais "Time Division Multiple Access" qui signifie accès multiple à répartition dans le temps). Elle trouve des applications particulièrement avantageuses dans les systèmes privés de radiocommunications professionnelles (ou systèmes PMR, de l'anglais "Professional Mobile Radio").

Les systèmes PMR offrent en général un service de chiffrement de bout en bout des données de trafic transmises durant les communications. Il s'agit de données codant de la phonie, notamment, mais plus généralement de données de toute nature. Le chiffrement a pour but de préserver la confidentialité et l'intégrité des données transmises et de prévenir l'usurpation d'identité des terminaux mobiles appartenant au système.

L'expression "de bout en bout" (en anglais : "end-to-end") est utilisée pour désigner le fait que le chiffrement des données transmises est effectué au niveau du terminal émetteur et que le déchiffrement est effectué au niveau du terminal récepteur ou des terminaux récepteurs. La totalité de la liaison est alors sécurisée, et ce de manière avantageusement indépendante de l'infrastructure du système. Cela s'oppose au cas de la sécurisation d'une portion seulement de la liaison entre le terminal émetteur et le terminal récepteur, par exemple l'interface air, pour laquelle le chiffrement et/ou le déchiffrement des données a lieu en certains points intermédiaires de la liaison.

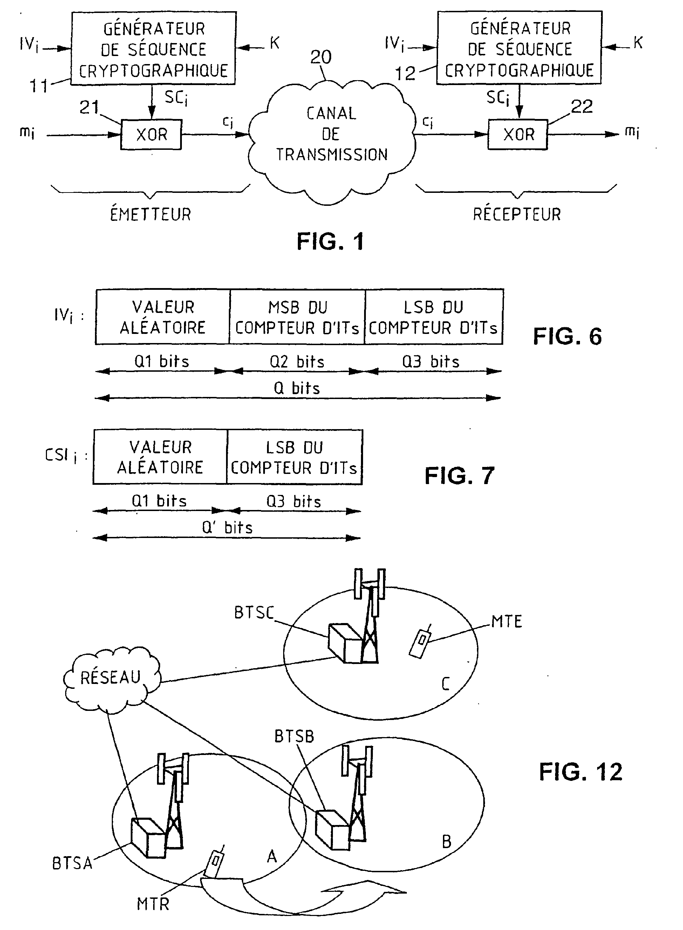

Dans l'état de la technique, on connaît des mécanismes de chiffrement/déchiffrement de données transmises entre un émetteur et un récepteur. Le principe d'un tel mécanisme est illustré par le schéma de la figure 1.

L'émetteur comprend un générateur de séquence cryptographique 11, qui génère un bloc de données $SC_i$ appelé séquence cryptographique, indépendamment du flux de données en clair, à partir d'une clé de cryptage K secrète et d'une information appelée vecteur d'initialisation $IV_i$ (de l'anglais "Intitialization Vector"). La séquence cryptographique $SC_i$ est telle que :

$$SC_i = E_K\left(IV_i\right) \tag{1}$$

où $E_K$ désigne le chiffrement de l'information $IV_i$ avec la clé K, selon un algorithme de chiffrement déterminé.

L'algorithme de chiffrement est le même pour tous les terminaux mobiles du système. Le vecteur d'initialisation $IV_i$ et la clé de cryptage K secrète sont connus à la fois du terminal émetteur et du terminal récepteur. Le vecteur d'initialisation $IV_i$ varie dans le temps pour éviter que la même séquence cryptographique soit utilisées deux fois avec la même clé K, ce qui affaiblirait gravement la sécurité des données transmises. L'indice i se réfère à une valeur courante du vecteur d'initialisation.

L'émetteur comprend aussi un opérateur OU-Exclusif 21 qui reçoit la séquence cryptographique $SC_i$ sur une première entrée et une séquence $m_i$ de données en clair sur une seconde entrée, et qui génère une séquence de données chiffrées $c_i$ en sortie, en sorte que :

$$c_i = m_i \oplus SC_i \tag{2}$$

où $\oplus$ désigne l'opération OU-Exclusif opérée bit à bit.

La séquence $c_i$ est transmise à travers le canal de transmission 20.

Le récepteur comprend lui aussi un générateur de séquence cryptographique 12 générant, à partir du même vecteur d'initialisation $IV_i$ et de la même clé de cryptage K secrète, une séquence cryptographique $SC_i$ identique à celle générée par le générateur 11 de l'émetteur et ayant servi au chiffrement de la séquence $c_j$. De même, il comprend aussi un opérateur OU-Exclusif 22 qui reçoit sur une première entrée la séquence cryptographique $SC_i$ générée par le générateur 12, qui reçoit sur une seconde entrée la séquence de données chiffrées $c_j$, et qui restitue en sortie la séquence $m_i$ de données en clair, du fait que :

$$c_i \oplus SC_i = m_i \oplus SC_i \oplus SC_i = m_i \tag{3}$$

Pour que la transmission de données chiffrées de bout en bout soit correcte, l'émetteur et le récepteur doivent effectuer des opérations duales l'une de l'autre. En particulier, il est donc nécessaire que le récepteur connaisse la relation temporelle à respecter en entrée de l'opérateur 22, entre la séquence cryptographique $SC_j$ qu'il génère d'une part et la séquence de données chiffrées $c_j$ qu'il reçoit d'autre part, pour que le déchiffrement se déroule correctement.

Cette contrainte est connue sous le nom de synchronisation cryptographique.

Document EP0446194 décrit un système pour la synchronisation des dispositifs de cryptage dans un système cellulaire numérique de communication. Chacun des dispositifs de cryptage comprend un compteur à plusieurs bits et génère une séquence pseudo-aléatoire qui est combiné avec les données devant être chiffrée. La séquence pseudo-aléatoire est une fonction de la valeur à plusieurs bits de compteur qui est incrémenté périodiquement en réponse à une série d'impulsions d'horloge. Pour permettre le décryptage correcte des données chiffrées, le système de la présente invention fournit des mises à jour en continu ou très fréquentes de la valeur du compteur émetteur qui peuvent être utilisés pour réinitialiser le compteur du récepteur et de resynchroniser le système sans la nécessité de réinitialisation et de la répétition d'impulsions d'horloge.

Dans le type d'applications envisagé, la synchronisation cryptographique présente en réalité deux aspects. Tout d'abord la synchronisation initiale, c'est-à-dire en début de communication. Et ensuite la synchronisation périodique, permettant de pallier une éventuelle perte de la synchronisation cryptographique entre les terminaux mobiles participant à la communication, et permettant de plus l'entrée tardive (en anglais « late entry ») d'autres terminaux mobiles dans la communication, dans le cadre d'une communication de groupe.

Un exemple de technique de synchronisation cryptographique pour le chiffrement de bout en bout d'une communication radio a déjà été proposé pour les systèmes de type FDMA (de l'anglais "Frequency Division Multiple Access" qui signifie accès multiple à répartition de fréquence). Cette technique est décrite, par exemple, dans le brevet américain US 4757536. Elle repose sur l'insertion périodique, dans le préambule des trames ou paquets de phonie, d'une information de synchronisation tant radio que cryptographique, permettant en particulier la fonction d'entrée tardive dans la communication. L'information de synchronisation est ici constituée de la valeur courante du vecteur d'initialisation.

Cette technique a été appliquée sans modification dans des systèmes de type TDMA comme le système TETRA (de l'anglais « TErrestrial Trunked Radio »), où aucune ressource n'avait été réservée a priori pour la transmission d'une information de synchronisation cryptographique : celle-ci est transmise de bout en bout par vol de trame de phonie (en anglais « Frame stealing »). Plus particulièrement, on remplace les données d'une trame de phonie contenue dans certaines trames TDMA (ou trames radio) déterminées, par une information de synchronisation cryptographique. Celle-ci permet au terminal récepteur de générer la séquence cryptographique convenant pour le déchiffrement des données de phonie transmises dans les trames TDMA qui suivent immédiatement. Il existe donc une relation temporelle déterminée et fixe entre la transmission des informations de synchronisation et celle des données chiffrées auxquelles elles se rapportent. On dit que l'information de synchronisation cryptographique est transmise dans la bande en référence au fait qu'elle occupe des ressources utiles de la communication. On pourra par exemple se référer au brevet américain US 2002/0066013 pour un exemple de cette technique appliquée au système TETRA.

Dans cette application, la technique connue présente néanmoins de nombreux inconvénients.

Tout d'abord, la synchronisation initiale doit être de bonne qualité pour éviter que des erreurs de transmission radioélectrique ne privent de nombreux terminaux en réception dans des communications de groupe, de la possibilité de recevoir et de déchiffrer correctement la phonie. C'est pourquoi l'information de synchronisation cryptographique est répétée en général 4 fois au cours de la première seconde de communication, soit au cours des 34 premières trames, ce qui provoque un taux de vol de trames de l'ordre de 11 %, dégradant sévèrement la qualité de la phonie.

Ensuite, le choix de la périodicité de la répétition de l'information de synchronisation cryptographique conduit à un compromis entre la qualité de la phonie qui demande une faible périodicité des vols de trames, d'une part, et la minimisation du retard lors des entrées tardives qui demande au contraire une forte périodicité, d'autre part. Ce compromis est en général peu satisfaisant.

Enfin, dans les systèmes offrant des services de chiffrement de bout en bout, la synchronisation cryptographique doit faire l'objet d'un soin particulier lorsqu'un terminal mobile en réception effectue un changement de cellule en cours de communication (en anglais : "handover"). En effet, les temps de propagation différents des paquets de phonie dans le sous-système réseau conduisent généralement à une perte de la synchronisation lors du changement de cellule. Cette perte de synchronisation est temporaire dans le cas où les informations de synchronisation sont répétées périodiquement en étant transportées par vol de trames de phonie, comme dans le système TETRA. Toutefois, la transmission de ces informations de synchronisation a lieu avec une périodicité beaucoup plus faible que la durée d'un changement de cellule correctement conçu. Il en résulte un retard non négligeable du rétablissement de la communication dans la cellule cible, qui conduit à une forte dégradation de la qualité de service. La seule solution pour pallier cet inconvénient serait d'augmenter la périodicité de la répétition de l'information de synchronisation cryptographique. Néanmoins, cette information étant transportée par vol de trame de phonie, la qualité de la phonie serait fortement dégradée.

Un premier objet de l'invention est de définir un mécanisme de synchronisation cryptographique dans un système TDMA possédant un canal de signalisation associée, qui élimine les inconvénients de l'art antérieur précités.

Un second objet de l'invention est de proposer un mécanisme de maintien de la synchronisation cryptographique lors du changement de cellule en cours de communication par un terminal mobile en réception.

Selon un premier aspect de l'invention, un procédé de transmission de données chiffrées entre un terminal mobile émetteur et au moins un terminal mobile récepteur d'un système de radiocommunications numériques, à travers un canal de transmission radio ayant une structure de trame telle qu'une trame TDMA comprend des intervalles de temps d'un premier type formant un canal de trafic pour la transmission d'informations de trafic et au moins un intervalle de temps d'un second type formant un canal de signalisation associée pour la transmission d'informations de signalisation, comprend les étapes suivant lesquelles :

- une séquence de paquets de données chiffrés est transmise dans le canal de trafic à partir d'un intervalle de temps du premier type déterminé, alors qu'une information de synchronisation cryptographique associée est transmise dans le canal de signalisation associée à l'intérieur d'un intervalle de temps du second type déterminé,

- et une information de retard de synchronisation cryptographique relative à l'écart temporel entre ledit intervalle de temps du second type déterminé et ledit intervalle de temps du premier type déterminé, est également transmise dans le canal de signalisation associée.

Ainsi, l'information de synchronisation cryptographique est transmise dans le canal de signalisation associée lorsque des ressources y sont disponibles à cet effet, évitant ainsi les inconvénients des vols de trames de phonie de la technique connue dans l'art antérieur.

Un second aspect de l'invention concerne un procédé de déchiffrement d'une séquence de paquets de données chiffrés transmise entre un terminal mobile émetteur et au moins un terminal mobile récepteur d'un système de radiocommunications numériques, à travers un canal de transmission radio ayant une structure de trame telle qu'une trame TDMA comprend des intervalles de temps d'un premier type formant un canal de trafic pour la transmission d'informations de trafic et au moins un intervalle de temps d'un second type formant un canal de signalisation associée pour la transmission d'informations de signalisation, comprenant les étapes consistant à :

a) recevoir ladite séquence de paquets de données chiffrés à partir d'un intervalle de temps du premier type déterminé ;

b) éventuellement, recevoir une information de synchronisation cryptographique associée dans le canal de signalisation associée, à l'intérieur d'un intervalle de temps du second type déterminé, et, dans ce cas,

c) recevoir également, dans le canal de signalisation associée, une information de retard de synchronisation cryptographique relative à l'écart temporel entre ledit intervalle de temps du second type déterminé et ledit intervalle de temps du premier type déterminé ;

d) générer une valeur d'un vecteur d'initialisation ayant servi à générer une séquence cryptographique utilisée pour le chiffrement de ladite séquence de paquets de données chiffrés ;

e) générer la même séquence cryptographique, à partir de la valeur du vecteur d'initialisation générée à l'étape d) ;

f) décaler la séquence cryptographique générée à l'étape e) en fonction de ladite information de retard de synchronisation cryptographique ; et,

g) déchiffrer ladite séquence de paquets de données chiffrés à partir de ladite séquence cryptographique décalée.

Un troisième aspect de l'invention concerne un dispositif de transmission de données chiffrées entre un terminal mobile émetteur et au moins un terminal mobile récepteur d'un système de radiocommunications numériques, à travers un canal de transmission radio ayant une structure de trame telle qu'une trame TDMA comprend des intervalles de temps d'un premier type formant un canal de trafic pour la transmission d'informations de trafic et au moins un intervalle de temps d'un second type formant un canal de signalisation associée pour la transmission d'informations de signalisation, comprenant :

- des moyens pour transmettre une séquence de paquets de données chiffrés dans le canal de trafic à partir d'un intervalle de temps du premier type déterminé, et pour transmettre une information de synchronisation cryptographique dans le canal de signalisation associée à l'intérieur d'un intervalle de temps du second type déterminé, et

- des moyens pour transmettre également dans le canal de signalisation associée, une information de retard de synchronisation cryptographique relative à l'écart temporel entre ledit intervalle de temps du second type déterminé et ledit intervalle de temps du premier type déterminé.

Un quatrième aspect de l'invention concerne un dispositif de déchiffrement d'une séquence de paquets de données chiffrés transmise entre un terminal mobile émetteur et au moins un terminal mobile récepteur d'un système de radiocommunications numériques, à travers un canal de transmission radio ayant une structure de trame telle qu'une trame TDMA comprend des intervalles de temps d'un premier type formant un canal de trafic pour la transmission d'informations de trafic et au moins un intervalle de temps d'un second type formant un canal de signalisation associée pour la transmission d'informations de signalisation, comprenant :

a) des premiers moyens de réception pour recevoir ladite séquence de paquets de données chiffrés à partir d'un intervalle de temps du premier type déterminé ;

b) des seconds moyens de réception pour, éventuellement, recevoir une information de synchronisation cryptographique associée dans le canal de signalisation associée, à l'intérieur d'un intervalle de temps du second type déterminé, et, dans ce cas,

c) des moyens de réception pour recevoir également, dans le canal de signalisation associée, une information de retard de synchronisation cryptographique relative à l'écart temporel entre ledit intervalle de temps du second type déterminé et ledit intervalle de temps du premier type déterminé ;

d) des premiers moyens de génération pour générer une valeur d'un vecteur d'initialisation ayant servi à générer une séquence cryptographique utilisée pour le chiffrement de ladite séquence de paquets de données chiffrés ;

e) des seconds moyens de génération, pour générer la même séquence cryptographique, à partir de la valeur du vecteur d'initialisation générée par lesdits premiers moyens de génération ;

f) des moyens de décalage pour décaler la séquence cryptographique générée par lesdits seconds moyens de génération, en fonction de ladite information de retard de synchronisation cryptographique ; et,

g) des moyens pour déchiffrer ladite séquence de paquets de données chiffrés à partir de ladite séquence cryptographique décalée.

Enfin, un cinquième et dernier aspect de l'invention concerne un terminal mobile d'un système de radiocommunications numériques, comprenant un dispositif de transmission, et/ou un dispositif de déchiffrement tels que définis ci-dessus.

D'autres caractéristiques et avantages de l'invention apparaîtront encore à la lecture de la description qui va suivre. Celle-ci est purement illustrative et doit être lue en regard des dessins annexés sur lesquels :

- la figure 1, déjà analysée, est un schéma synoptique illustrant le chiffrement et le déchiffrement de données transmises entre un émetteur et un récepteur ;
- la figure 2 est un diagramme montrant un exemple de structure de trame dans un système de radiocommunications TDMA ;
- la figure 3a et la figure 3b sont, respectivement, un diagramme et un tableau illustrant un exemple d'encapsulation de trames de phonie (ou paquets de phonie) dans la structure de trame de la figure 2 ;
- la figure 4 est un schéma synoptique d'un terminal mobile selon l'invention ;
- la figure 5 est un diagramme illustrant un exemple de séquences d'étapes d'un procédé de transmission de données chiffrées selon l'invention ;
- la figure 6 est un diagramme illustrant un exemple de vecteur d'initialisation selon l'invention ;
- la figure 7 est un diagramme illustrant un exemple d'information de synchronisation selon l'invention, correspondant à l'exemple de vecteur d'initialisation selon la figure 6 ;
- la figure 8 est un diagramme illustrant un exemple de transmission de quatre premières séquences de données chiffrées dans une super-trame du canal radio pour un alternat déterminé ;
- la figure 9 est un diagramme illustrant un exemple de réception de quatre premières séquences de données chiffrées dans une super-trame du canal radio pour l'alternat considéré à la figure 8 ;
- la figure 10 est un diagramme illustrant un exemple de séquence d'étapes d'un procédé de déchiffrement de données chiffrées selon l'invention ;
- la figure 11 est table de conversion donnant une valeur d'écart temporel exprimée en nombre de trames de phonie en fonction de la valeur dudit écart temporel exprimée en nombre d'intervalles de temps, dans l'exemple d'encapsulation des figures 3a et 3b ;
- la figure 12 est un schéma montrant une configuration de handover dans un système de radiocommunications ;

- la figure 13 est un diagramme illustrant un exemple de séquence d'étapes selon l'invention, pour maintenir la synchronisation cryptographique lors d'un handover.

La station de base d'une cellule peut établir des canaux logiques de trafic avec un ou plusieurs terminaux mobiles situés dans sa zone de couverture radio, après une procédure d'établissement d'appel effectuée au moyen d'un canal logique de contrôle dédié. Le canal de trafic établi avec un terminal mobile est descendant et/ou montant. Un ou plusieurs canaux logiques de trafic sont multiplexés, sur une fréquence déterminée, avec un canal logique de signalisation associée servant à échanger de la signalisation en cours de communication.

L'invention est décrite ci-dessous dans son application à un exemple de système de radiocommunications qui est un système TDMA-2, c'est-à-dire un système de type TDMA d'ordre 2.

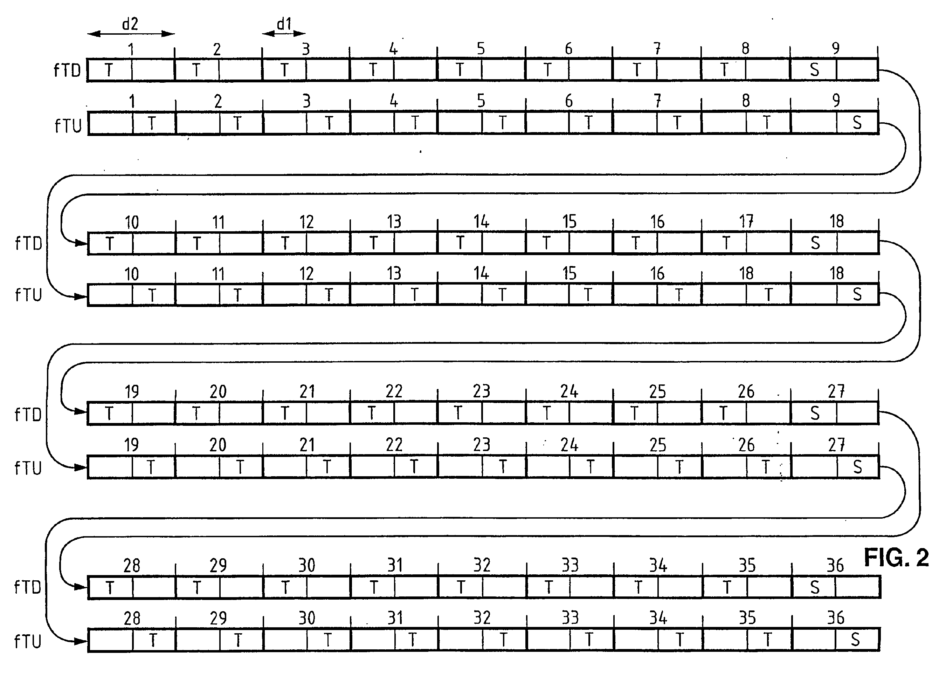

La figure 2 est un diagramme qui illustre un exemple de structure d'une super-trame radio sur des canaux physiques de trafic dans un tel exemple. Sur cette figure, on a représenté en les juxtaposant selon la verticale, d'une part la structure d'une super-trame radio sur un canal physique de trafic montant établi sur une fréquence $f_{TU}$ déterminée, et d'autre part, la structure d'une super-trame radio sur un canal physique de trafic descendant établi sur une fréquence $f_{TD}$ déterminée, différente de la fréquence $f_{TU}$.

Une super-trame du canal physique de trafic est subdivisée en quatre trames (aussi appelées trames radio, trames TDMA ou segments, dans le jargon de l'Homme du métier), qui sont représentées l'une au-dessus de l'autre à la figure. Dit autrement, une trame TDMA correspond à un quart d'une super-trame. Chaque trame TDMA est composée de neuf intervalles de temps composites ayant chacun une durée d2 égale à 40 ms, et comprenant chacun deux intervalles de temps élémentaires consécutifs, chacun de durée d1 égale à 20 ms.

Chacun des huit premiers intervalles de temps composites de chaque trame comporte un intervalle de temps élémentaire impair pour le sens descendant et un intervalle de temps élémentaire pair pour le sens montant, qui sont repérés par la lettre T. La suite récurrente de ces intervalles de temps T forme un canal logique de trafic ou canal TCH (de l'anglais "Trafic CHannel"), respectivement descendant et montant. En conséquence, sur le même canal physique de trafic descendant établi sur la fréquence $f_{TD}$ déterminée, la station de base peut multiplexer, dans les intervalles de temps élémentaires pairs, un autre canal logique de trafic établi avec une autre station mobile.

Le neuvième intervalle de temps composite de chaque segment est réservé à la transmission d'informations de signalisation. La suite récurrente de ces intervalles de temps, qui sont repérés par la lettre S, forme un canal logique de signalisation associée, respectivement descendant et montant. En pratique plusieurs canaux logiques peuvent être multiplexés dans les intervalles de temps S de la super-trame. Toutefois, par souci de commodité, on se référera dans la suite à un seul canal de signalisation. Il s'agit d'un canal de type SACCH (de l'anglais "Slow Associated Control CHannel") c'est-à-dire un canal de contrôle lent permettant d'effectuer la supervision du canal logique de trafic auquel il est associé.

Sur la figure 2, les numéros indiqués au-dessus des trames correspondent aux numéros d'intervalles de temps composites dans la super-trame, c'est-à-dire aussi aux numéros d'intervalles de temps élémentaires dans chacun des canaux montant et descendant.

Selon l'invention, ce canal de signalisation associée est utilisé pour la transmission des informations de synchronisation cryptographique périodiques. Celles-ci sont donc transmises « hors-bande ». Cette technique permet d'éviter les vols de trames pendant toute la durée de l'alternat en cours. Des vols de trames n'interviennent que pour la transmission de la synchronisation cryptographique initiale.

Par exemple, l'information de synchronisation cryptographique qui est transmise à un instant déterminé est la valeur courante du vecteur d'initialisation, c'est-à-dire celle ayant servi à la génération de la séquence cryptographique courante, c'est-à-dire aussi à la génération de la séquence de données chiffrées courante.

Or, une séquence de données chiffrées est émise dans le canal TCH dès qu'elle est disponible. En particulier, l'alternat en cours peut commencer sur n'importe quel intervalle de temps T entre deux intervalles de temps S consécutifs. En choisissant une séquence cryptographique dont la longueur en nombre de bits correspond avantageusement au nombre de bits utiles transmis entre deux intervalles de temps S consécutifs, on s'assure que, pour un alternat déterminé, chaque séquence de données chiffrées sera transmise à partir du même intervalle de temps dans chaque trame TDMA.

Il est néanmoins nécessaire de pallier l'absence de relation temporelle fixe (d'un alternat à un autre) entre les séquences cryptographiques telles qu'elles sont générées dans le terminal émetteur pour le chiffrement, d'une part, et les intervalles de temps S pouvant être utilisés pour la transmission des informations de synchronisation cryptographiques périodiques correspondantes, d'autre part. De plus, il faut aussi pallier l'absence de relation temporelle fixe entre les séquences de synchronisation qui doivent être générées par le terminal récepteur pour le déchiffrement, d'une part, et les intervalles de temps utilisés pour la transmission des informations de synchronisation cryptographiques, dans une cellule qui peut être différente de celle dans laquelle se trouve le terminal émetteur et ne pas être synchronisée (d'un point de vue temporel) par rapport à celle-ci, d'autre part.

L'unité de données en sortie d'un codeur de parole du terminal émetteur est une trame de phonie, et correspond à un paquet de données de taille déterminée. On note M la taille (en nombre de bits) d'une trame ou paquet de phonie, c'est-à-dire le nombre de bits d'un paquet de phonie. Dans l'exemple considéré dans la suite, M = 88. Lorsque le débit binaire en sortie du codeur de parole est égal à 4,4 Kbits/s (kilo-bits par seconde), la durée d'une trame ou paquet de phonie est ainsi égale à 20 ms.

On note N la longueur (en nombre de bits) de la séquence cryptographique $SC_i$. De préférence, N est un multiple entier de M. Dit autrement, il existe un nombre entier P tel que :

$$N = P \times M \qquad (4)$$

Il en résulte que, pour le chiffrement, chaque séquence cryptographique $SC_i$ est combinée bit à bit dans l'opérateur OU-Exclusif (on dit parfois "XORée") avec P trames de phonie successivement délivrées par le codeur de parole. Une nouvelle séquence cryptographique $SC_i$ est donc générée une fois toutes les P trames de phonie.

Dans l'exemple considéré dans la suite, N =1584 et P =18.

Lorsque N correspond au nombre de bits utiles transmis entre deux intervalles de temps S, les $P \times M$ bits de P trames de phonie consécutives peuvent être encapsulés dans exactement huit intervalles de temps radio. Dans l'exemple considéré, le débit binaire sur la canal radio est égal à 16 Kbits/s, ce qui permet largement de transmettre dans chaque intervalle de temps T (dont on rappelle que la durée d1 est égale à 20 ms) un nombre de bits utiles égal à N/8. Ces 198 bits utiles peuvent se décomposer de quatre manières différentes.

Selon une première manière, un intervalle de temps comprend, dans cet ordre :

- 88 bits d'un premier paquet de phonie transmis en entier ;
- 88 bits d'un deuxième paquet de phonie transmis en entier ; et
- 22 bits d'un troisième paquet de phonie dont seul un quart est transmis dans cet intervalle de temps.

Selon une deuxième manière, un intervalle de temps comprend successivement :

- 66 bits d'un premier paquet de phonie transmis dont seulement trois quarts des bits sont transmis dans cet intervalle de temps;
- 88 bits d'un second paquet de phonie transmis en entier ; et
- 44 bits d'un troisième paquet de phonie dont seulement la moitié des bits sont transmis dans cet intervalle de temps.

Selon une troisième manière, un intervalle de temps comprend, dans cet ordre :

- 44 bits d'un premier paquet de phonie dont seulement la moitié des bits sont transmis dans cet intervalle de temps ;
- 88 bits d'un second paquet de phonie transmis en entier ; et
- 66 bits d'un troisième paquet transmis dont seulement trois quarts des bits sont transmis dans cet intervalle de temps.

Selon une quatrième et dernière manière, on place dans un intervalle de temps et dans cet ordre :

- 22 bits d'un premier paquet de phonie dont seul un quart est transmis dans cet intervalle de temps ;
- 88 bits d'un deuxième paquet de phonie (données contenues dans un trame de phonie) transmis en entier ; et,
- 88 bits d'un troisième paquet de phonie transmis en entier.

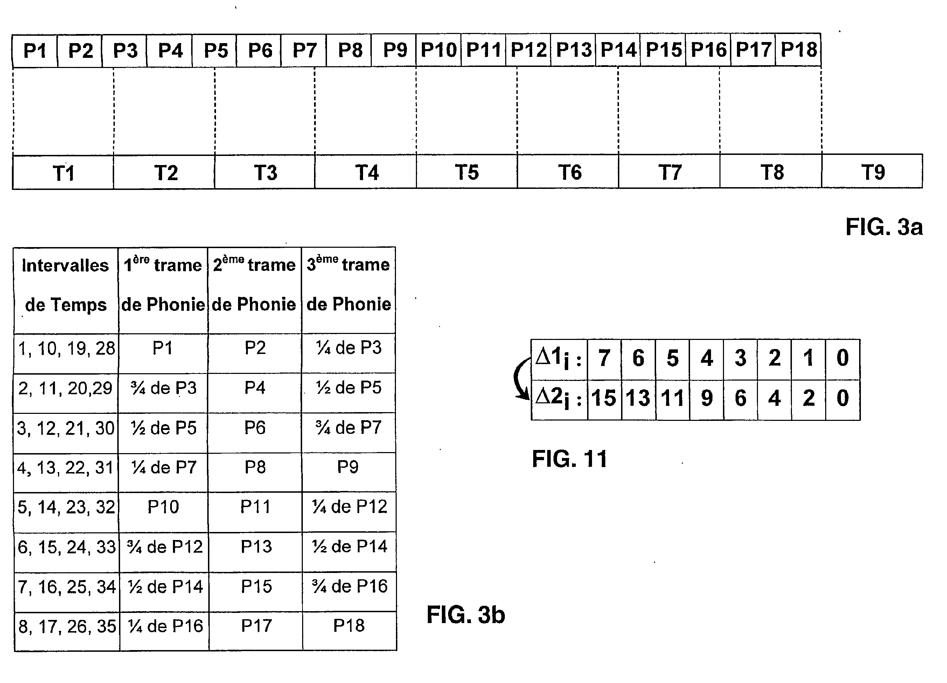

En combinant ces quatre manières de répartir un groupe de 196 bits dans un intervalle de temps radio, l'une à la suite de l'autre, et en renouvelant cette combinaison une seconde fois, il est possible de transmettre 18 paquets de phonie, respectivement notés P1 à P18 dans 8 intervalles de temps soit une trame TDMA, comme il est présenté sur le chronogramme de la figure 3a et dans le tableau de la figure 3b. Par soucis de clarté, le chronogramme de la figure 3a ne montre que les intervalles de temps, noté T1 à T9, de l'une des voies montante ou descendante du canal de trafic.

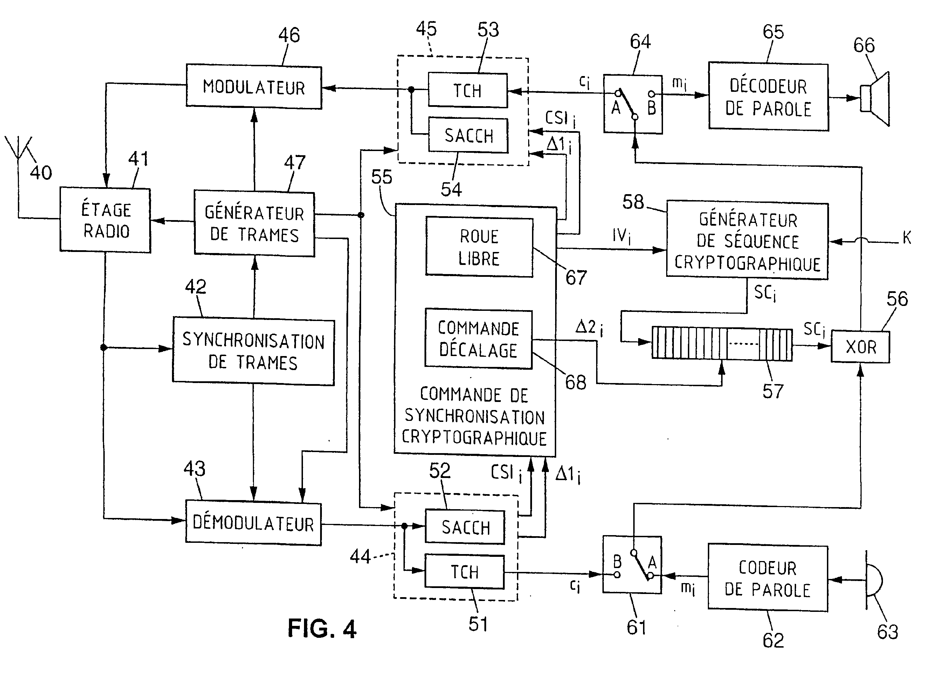

Un schéma synoptique d'un terminal mobile selon l'invention est représenté sur la figure 4. L'antenne 40 du terminal est reliée à son étage radio 41 correspondant à la partie analogique du terminal.

Pour la partie réception, le signal en bande de base délivré par l'étage radio 41 est fourni à une unité de synchronisation 42 et à un démodulateur 43. L'unité 42 recherche des motifs de synchronisation dans le signal reçu. Elle assure la fonction de synchronisation temporelle du terminal. Le démodulateur 43, qui est synchronisé par l'unité 42, estime les symboles transmis à partir du signal en bande de base, et fournit ces symboles estimés à un circuit 44 de traitement du signal reçu.

Pour la partie émission, un circuit 45 de traitement du signal à émettre délivre des symboles à émettre qui sont modulés par un modulateur 46. Celui-ci délivre les symboles modulés à l'étage radio 41.

Un générateur de trame 47, qui est synchronisé par l'unité 42, contrôle l'étage radio 41, le démodulateur 43 et le modulateur 46 pour placer le terminal en mode réception ou en mode émission dans les intervalles de temps appropriés selon la structure de trame du système de radiocommunications. Dans le cas de l'exemple de structure de trame décrit à la figure 2, le terminal est alternativement en mode émission et en mode réception, en changeant toutes les 20 ms. Le générateur de trame 47 assure également le séquencement du circuit 44 de traitement du signal reçu, et celui du circuit 45 de traitement du signal à émettre.

La figure 4 illustre dans chacun des blocs 44 et 45, des circuits respectivement 51 et 52, et 53 et 54 de traitement des canaux logiques, respectivement de trafic et de signalisation, qui ont été évoqués plus haut en référence à la figure 2.

Lorsque le terminal est émetteur dans une communication en cours, une première voie A d'un commutateur à deux voies 61 reçoit des séquences de données en clair $m_i$ successives, qui sont délivrées par un codeur de paroles 62 à partir du signal analogique produit par un micro 63 lorsqu'un bouton PTT (« Push-To-Talk ») du terminal est activé par l'utilisateur.

La sortie du commutateur 61 est reliée à une première entrée d'un opérateur OU-Exclusif 56 pour le chiffrement de la séquence $m_i$. Une seconde entrée de l'opérateur 56 reçoit une séquence cryptographique $SC_i$ générée par un générateur de séquence cryptographique 58, à travers un registre à décalage 57. La séquence $SC_i$ est générée par le générateur 58 à partir d'une clé de cryptage K secrète déterminée, d'une part, et de la valeur courante $IV_i$ d'un vecteur d'initialisation, d'autre part. Une unité, 55 de commande de synchronisation cryptographique délivre la valeur courante $IV_i$ du vecteur d'initialisation au générateur 58.

Le vecteur d'initialisation $IV_i$ varie dans le temps et change de valeur (parallèlement côté émetteur et côté récepteur) à chaque renouvellement de la séquence $SC_i$ c'est-à-dire tous les P paquets de phonie. Dans un exemple simple, la valeur du vecteur $IV_i$ dépend de la valeur du compteur d'intervalles de temps dans la cellule du terminal émetteur. Bien entendu, toute autre loi d'évolution de la valeur du vecteur $IV_i$ est possible, dès lors que cette loi est déterministe afin de pouvoir être suivie en parallèle par le terminal émetteur et le ou les terminaux récepteurs.

La clé de cryptage K, quant à elle, est constante pour une communication déterminée. Elle est générée lors de l'établissement de la communication par un algorithme de choix de clé de cryptage approprié. Si nécessaire, un indice définissant cette clé peut être transmis dans la signalisation d'établissement de l'appel ou être transmis dans la séquence de signalisation initiale de l'alternat, puis ensuite dans le canal de signalisation associé pour la fonction d'entrée tardive.

La sortie de l'opérateur 56 délivre une séquence de données chiffrées $c_i$ qui est délivrée au circuit 53 du circuit de traitement 45 à travers une première voie A d'un second commutateur 64 à deux voies.

Une information de synchronisation cryptographique $CSI_i$ est délivrée par l'unité 55 au circuit de traitement 45 des données à émettre. Cette information de synchronisation cryptographique est dérivée de la valeur du vecteur d'initialisation $IV_i$ utilisée pour la génération de la séquence $SC_i$ ayant servi au chiffrement de la séquence $c_i$. Elle est émise, sous le contrôle du générateur de trame 47, dans au moins un intervalle de temps de trafic T en début d'alternat, venant dans la structure de trame immédiatement avant l'intervalle de temps dans lequel la première séquence de données chiffrées $c_i$ avec i=0 est transmise (synchronisation initiale). Pour cette émission "dans la bande", c'est le circuit 53 qui est actif. L'information $CSI_i$ est aussi répétée, avec une périodicité déterminée (qui peut être variable au cours de la durée de la communication), dans des intervalles de temps S déterminés du canal de signalisation associée, pour les séquences de données chiffrées suivantes, c'est-à-dire les séquences $c_i$ avec i différent de 0 (synchronisation périodique). Pour ces émissions "hors bande", c'est le circuit 54 qui est actif.

Par ailleurs, une information $\Delta 1_i$ de retard de synchronisation cryptographique est également délivrée par l'unité 55 au circuit de traitement 45. Elle est relative à l'écart temporel entre le début de la transmission des paquets de données chiffrés de la séquence $c_i$ autre que la première, d'une part, et la transmission de l'information de synchronisation cryptographique périodique $CSI_i$ (pour i différent de 0), d'autre part. L'information $\Delta 1_i$ est préférentiellement exprimée en nombre d'intervalles de temps, car elle est alors codée par seulement trois bits (en prenant des valeurs de 0 à 7). Néanmoins, ceci n'est pas obligatoire. Elle peut aussi être exprimée en nombre de paquets de phonie. Elle est émise dans un intervalle de temps S du canal de signalisation associée (de préférence le même que celui dans lequel l'information de synchronisation périodique $CSI_i$ est transmise, parce que c'est plus simple, mais il peut aussi s'agir d'un intervalle de temps S différent).

Lorsque le terminal est récepteur dans une communication en cours, le circuit 51 du circuit de traitement du signal reçu 44 délivre des séquences de données chiffrées $c_i$ qui sont transmises sur une seconde voie B du commutateur 61. De plus, en début d'alternat, le circuit 51 délivre à l'unité 55 l'information de synchronisation cryptographique $CSI_i$ reçue dans le canal de trafic TCH. Après le début de l'alternat, c'est le circuit 52 du circuit 44 qui, pour au moins certaines séquences $c_i$, délivre à l'unité 55 l'information $CSI_i$ ainsi que l'information $\Delta 1_i$, celles-ci étant reçues dans le canal de signalisation associée SACCH.

L'opérateur OU-Exclusif 56 reçoit la séquence $c_i$ à travers ladite voie B du commutateur 61 et en assure le déchiffrement d'une manière duale de celle dont il assure le chiffrement lorsque le terminal est émetteur. La sortie de l'opérateur 56 délivre alors une séquence de données en clair $m_i$ qui est délivrée à un décodeur de canal 65 à travers une seconde voie B du commutateur 64. Le décodeur 65 délivre, à partir de la séquence $m_i$, un signal analogique qui est restitué sous forme audible à l'utilisateur via un haut-parleur 66.

Une valeur $IV_i$ du vecteur d'initialisation est délivrée par l'unité 55 au générateur 58 pour chaque séquence $c_i$ à déchiffrer. On notera que, côté terminal récepteur, la valeur du vecteur d'initialisation $IV_i$ peut être dérivée de la valeur de l'information de synchronisation cryptographique $CSI_i$ reçue. Néanmoins, la valeur $CSI_i$ adéquate n'est reçue que dans certains au moins des intervalles de temps S du canal SACCH, c'est-à-dire pour certaines seulement des séquences de données chiffrées à déchiffrer. D'autres séquences de données chiffrées $c_i$ sont reçues, pour lesquelles l'information de synchronisation cryptographique $CSI_i$ correspondante n'est pas reçue.

Lorsque l'information de synchronisation cryptographique $CSI_i$ (pour i différent de 0) est reçue dans un intervalle de temps S du canal SACCH, elle est délivrée à l'unité 55 par le circuit 52. L'information $IV_i$ en est dérivée par l'unité 55 et elle est alors délivrée par l'unité 55 au générateur 58. De plus, le circuit 52 délivre alors à l'unité 55 également l'information $\Delta 1_i$ précitée. Un module 68 de commande de décalage de l'unité 55, génère alors une information $\Delta 2_i$ à partir de l'information $\Delta 1_i$. Cette information sert à décaler la séquence cryptographique $SC_i$ afin de tenir compte de l'écart temporel entre le début de la transmission des paquets de données chiffrés de la séquence $c_i$ autre que la première, d'une part, et la transmission de l'information de synchronisation cryptographique périodique $CSI_i$ se rapportant à la séquence $c_i$, d'autre part. L'information $\Delta 2_i$ est exprimée en nombre de bits à décaler. Le décalage s'effectue en contrôlant le registre à décalage 57 de façon appropriée, d'une manière qui est à la portée de l'Homme du métier.

Lorsque, à l'inverse, une séquence de données chiffrées $c_i$ est reçue mais pas l'information de synchronisation cryptographique $CSI_i$ (toujours pour i différent de 0), qui a été utilisée pour le chiffrement de la séquence $c_i$, l'information $IV_i$ est générée par un module 67 de l'unité 55, dit module de "roue libre", à partir de la connaissance de la dernière valeur $IV_i$ dérivée d'une valeur $SCI_i$ reçue, d'une part, et de la loi d'évolution de la valeur $IV_i$, d'autre part. Un tel module met en oeuvre un algorithme réversible, dit algorithme de "roue libre", qui est connu en soi. Par réversible, on entend le fait qu'il peut tourner dans un sens ou dans l'autre, en donnant à chaque fois une valeur de sortie obtenue de façon déterministe à partir de la valeur d'entrée. Par conséquent, si on l'applique une première fois dans un sens déterminé à une valeur d'entrée déterminée, puis une seconde fois en sens inverse à la valeur de sortie obtenue précédemment, on doit retrouver ladite valeur d'entrée déterminée. On pourra par exemple se référer à celui retenu dans le standard du système PMR appelé Projet 25 - Phase I, de l'APCO (de l'anglais "Association of Public-Safety Communications Officials-International, Inc."). Un tel algorithme exploite le caractère déterministe de la loi d'évolution de la valeur du vecteur d'initialisation.

Pour résumer, les commutateurs 61 et 64 sont pilotés de manière que leur voie A respective soit activée lorsque le terminal est émetteur (cas représenté à la figure), et que leur voie B respective soit activée lorsque le terminal est récepteur.

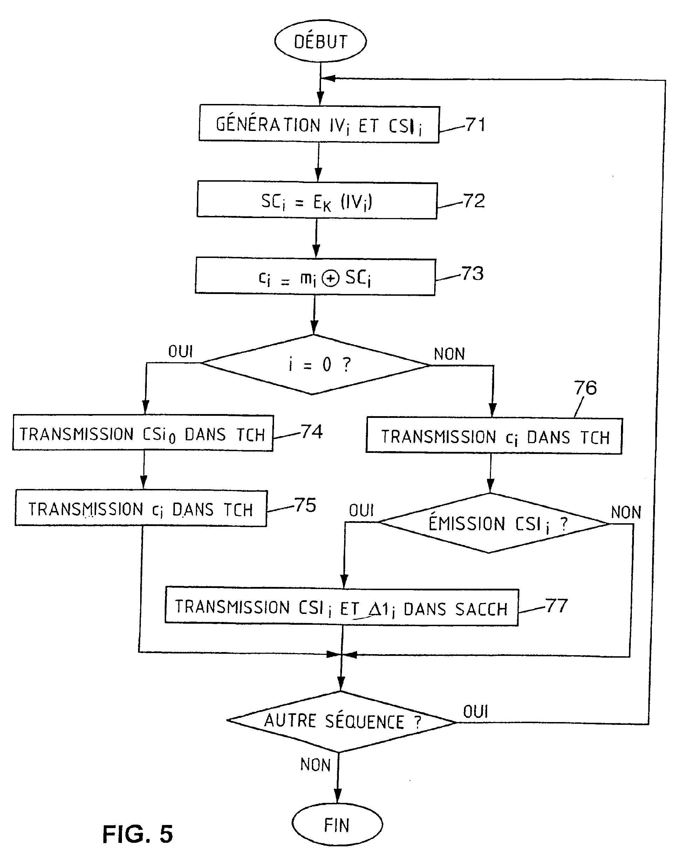

A la figure 5, on a représenté un exemple de séquence d'étapes pour la transmission d'une séquence de données chiffrées déterminée suivant le procédé de transmission de l'invention. Ce procédé est mis en oeuvre dans un terminal mobile lorsqu'il est émetteur dans une communication (c'est-à-dire le terminal qui dispose de l'alternat en cours).

Dans une étape 71, l'unité 55 génère la valeur courante du vecteur d'initialisation $IV_i$, selon une loi d'évolution déterministe. Dans un exemple de réalisation avantageux, la valeur $IV_i$ courante est fonction de la valeur du compteur d'intervalles de temps dans la cellule où se trouve le terminal émetteur. La valeur du compteur d'intervalles de temps est tenue à jour par l'infrastructure réseau pour chaque cellule. Elle est connue de chaque terminal mobile qui est en communication dans cette cellule. Ce compteur a pour fonction de permettre la synchronisation radio des terminaux avec la station de base de la cellule.

On suppose dans cet exemple de réalisation que les différentes cellules sont synchronisées, d'un point de vue radio, de manière peu précise entre elles, par exemple avec la précision fournie par NTP (de l'anglais "Network Time Protocol"). Les valeurs des compteurs d'intervalles de temps dans les différentes cellules peuvent donc être différentes, mais la différence entre ces valeurs est faible et peut être bornée a priori.

En début d'alternat, l'unité 55 du terminal émetteur génère une valeur aléatoire codée sur Q1 bits, où Q1 est un nombre entier déterminé. Cette valeur est conservée en mémoire pendant toute la durée de l'alternat.

Ainsi qu'il est illustré par le diagramme de la figure 6, chaque valeur du vecteur d'initialisation $IV_i$ résulte de la concaténation binaire des Q1 bits de cette valeur aléatoire et d'un nombre déterminé Q2+Q3 de bits de la valeur courante du compteur d'intervalles de temps, où Q2 et Q3 sont des nombres entiers déterminés. Dans l'exemple représenté, les Q1 bits de la valeur aléatoire forment les Q1 bits les plus significatifs ou MSB (de l'anglais "Most Significant Bits") de $IV_i$, les Q3 bits les moins significatifs ou LSB (de l'anglais "Least Significant Bits") de la valeur du compteur d'intervalles de temps forment les Q3 LSB de $IV_i$, et les Q2 MSB de la valeur du compteur d'intervalles de temps forment Q2 bits intermédiaires de $IV_i$. Le vecteur d'initialisation $IV_i$ comprend donc un nombre Q déterminé de bits, tel que Q=Q1+Q2+Q3.

L'unité 55 génère aussi l'information de synchronisation cryptographique $CSI_i$, au moins lorsque cette information peut ou doit être transmise. On rappelle que la valeur $CSI_i$ est dérivée de la valeur $IV_i$. Dans l'exemple représenté à la figure 7, les Q1 bits de la valeur aléatoire forment les Q1 MSB de $CSI_i$, et les Q3 LSB de la valeur du compteur d'intervalles de temps forment les Q3 LSB de $CSI_i$, en sorte que $CSI_i$ est codée sur un nombre Q' déterminé de bits tel que Q'=Q1+Q3.

La synchronisation au moins approximative des compteurs d'intervalles de temps de chacune des cellules du terminal émetteur et du terminal récepteur, permet en effet de ne transmettre au terminal récepteur que les Q3 LSB de la valeur du compteur de la cellule du terminal émetteur (en plus de la valeur aléatoire codée sur Q1 bits, bien entendu). En effet, le terminal récepteur qui se trouve dans une cellule quelconque du système peut alors reconstituer la totalité de la valeur du compteur d'intervalles de temps de la cellule du terminal émetteur à partir de la valeur du compteur d'intervalles de temps dans sa propre cellule (dont il prendra les Q2 MSB, à une unité près le cas échéant) d'une part, et des Q3 LSB reçus d'autre part.

L'avantage présenté par cette méthode est que la variabilité introduite par le compteur d'intervalles de temps s'ajoute à la variabilité de la valeur aléatoire générée par le terminal émetteur. Ceci augmente en effet le degré de sécurité sans augmentation de la taille de la valeur aléatoire à générer. De plus, cette méthode garantit une totale protection contre le rejeu.

En variante, on peut transmettre dans l'information $SCI_i$ la différence entre les valeurs des compteurs d'intervalles de temps dans les cellules respectives du terminal émetteur et du terminal récepteur, au lieu de transmettre les LSB de la valeur du compteur d'intervalles de temps dans la cellule du terminal émetteur.

On notera que la loi d'évolution du vecteur d'initialisation $IV_i$ est déterministe en ce sens que, connaissant une valeur du vecteur à un instant donné, on peut déduire sa valeur $IV_j$ à un instant ultérieur (avec j>i), en fonction de l'évolution de la valeur du compteur d'intervalles de temps dans la cellule du terminal émetteur. On notera également que la valeur aléatoire initiale doit être transmise à chaque fois dans la valeur $CSI_i$ afin de permettre l'entrée tardive d'autres terminaux.

De retour à la figure 5, le générateur 58 produit la séquence cryptographique $SC_i$ courante dans une étape 72, selon la relation déjà donnée plus haut :

$$SC_i = E_K \left( IV_i \right) \hspace{4cm} (1)$$

où $E_K$ désigne le chiffrement de l'information $IV_i$ avec la clé K, selon un algorithme de chiffrement déterminé qui est le même pour tous les terminaux mobiles du système, et qui, bien entendu, est le même que le terminal soit émetteur ou soit récepteur. La séquence $SC_i$ est stockée dans le registre 57 au fur et à mesure de sa génération.

Lorsque la séquence $SC_i$ est entièrement disponible, alors, dans une étape 73, l'opérateur 56 effectue l'opération OU-Exclusif bit à bit entre les N bits de la séquence $SC_i$ et un nombre identique $P{\times}M$ de bits provenant de P paquets de phonie consécutifs formant une séquence de données en clair $m_i$ de $P{\times}M$ bits (ces $P{\times}M$ bits étant stockés dans un registre à décalage approprié, non représenté).

On distingue ensuite le cas de la première séquence de données chiffrées, c'est-à-dire lorsque i est égal à 0, qui correspond à la synchronisation cryptographique initiale (en début de l'alternat), du cas des séquences de données chiffrées suivantes, c'est-à-dire lorsque i est différent de 0, qui correspond à la synchronisation cryptographique périodique.

Considérons tout d'abord le cas où i est égal à zéro (i=0). Dans un exemple, l'intervalle de temps 2 (voir figure 2) d'une trame TDMA donnée porte la demande d'alternat (début de transmission par le terminal émetteur). L'information de synchronisation cryptographique initiale $CSI_0$ est alors transmise, dans une étape 74, dans un ou plusieurs des intervalles de temps T suivants, par exemple les deux intervalles de temps 3 et 4, en étant répétée plusieurs fois (par exemple autant de fois que sa longueur le permet, compte tenu des bits de signalisation à transmettre en plus des bits utiles, sachant qu'un intervalle de temps de 20 ms peut contenir au maximum 320 bits avec un débit de 16 Kbits/s).

La séquence de données chiffrées $c_0$ est alors transmise, dans une étape 75, à partir de l'intervalle de temps T suivant, ici l'intervalle de temps 5. Cet intervalle de temps contient les deux premières trames de phonie, ainsi qu'un quart de la trame de phonie suivante (voir tableau de la figure 3b). On notera que dans le cas où la première information de phonie transmise dans un intervalle de temps déterminé correspond à une trame de phonie incomplète (par exemple intervalles de temps 2, 3, 4, 6, 7, 8, 11,12, etc.), la première trame de phonie est préférentiellement insérée dans cet intervalle de temps déterminé à partir de la première position temporelle telle que la première trame de phonie sera transmise complètement dans cet intervalle de temps (référence est faite au diagramme et au tableau des figures 3a et 3b, respectivement). De cette manière, on s'assure que les informations de phonie transmises jusqu'à l'intervalle de temps de signalisation S suivant correspondent toujours à un nombre entier de trames de phonie. Cela simplifie la détermination de l'information $\Delta2_i$ pour la synchronisation périodique (voir plus loin).

Dit autrement, la transmission de phonie est donc précédée par une transmission dans la bande de l'information de synchronisation cryptographique initiale. Cette transmission n'engendre en général aucune dégradation de qualité de la phonie, car elle se produit pendant une période de temps servant au calcul par le codeur de parole des premières trames de phonie à transmettre.

Considérons maintenant le cas où i est différent de zéro. On note tout d'abord que les séquences cryptographiques $SC_i$ et donc les séquences de données chiffrées $c_i$ ont de préférence une longueur en bits égale à la durée séparant deux intervalles de temps S consacrés à la signalisation (compte tenu du débit utile sur le canal). Ainsi, la position des séquences $c_i$ est fixe par rapport aux intervalles de temps S au cours d'un alternat déterminé. Mais cette position varie d'un alternat à l'autre. Dans l'exemple envisagé plus haut, les séquences $c_i$ vont de l'intervalle de temps 5 à l'intervalle de temps 13, de l'intervalle de temps 14 à l'intervalle de temps 22, etc..

Dans une étape 76, la séquence de données chiffrées courante $c_i$ est transmise à partir d'un intervalle de temps du canal de trafic TCH, ici l'intervalle 14 pour la deuxième séquence $c_i$ (i=1), l'intervalle 23 pour la troisième séquence $c_2$ (i=2), etc., compte tenu de l'hypothèse faite ci-dessus.

Lorsque les conditions existent pour que l'information de synchronisation cryptographique soit transmise, la valeur $CSI_i$ est aussi transmise, dans une étape 77, à l'intérieur d'un intervalle de temps S déterminé du canal de signalisation associée SACCH. Dans un exemple, ledit intervalle de temps S déterminé est l'intervalle de temps S venant dans la structure de trame immédiatement avant, ou le premier intervalle de temps du second type venant dans la structure de trame après l'intervalle de temps T à partir duquel la séquence $c_i$ est transmise. Il s'agit ainsi de l'intervalle 9 (pour i=1), de l'intervalle 18 (pour i=2), etc. Grâce à cette caractéristique, l'information $CSI_i$ et la séquence $c_i$ sont transmises dans des intervalles de temps les plus rapprochés possibles, ce qui simplifie leur traitement par le terminal récepteur.

A l'étape 77, l'information $\Delta 1_i$ est aussi transmise dans un intervalle de temps S du canal SACCH, de préférence le même que celui dans lequel l'information $CSI_i$ est transmise. De cette manière, l'information $\Delta 1_i$ est reçue par le récepteur sensiblement en même temps que l'information $CSI_i$. Ceci simplifie le traitement par le terminal récepteur, et garantit un retard minimal lors de l'entrée tardive d'un nouveau terminal récepteur dans la communication, puisque toutes les informations dont il a besoin pour déchiffrer la séquence $c_i$ lui parviennent dans une période de temps la plus réduite possible.

Dans un exemple avantageux, l'information $\Delta 1_i$ est le nombre d'intervalles de temps T du canal de trafic TCH séparant l'intervalle de temps T à partir duquel la séquence $c_i$ est transmise dans une trame déterminée, et l'intervalle de temps S du canal SACCH dans lequel l'information $CSI_i$ de même que l'information $\Delta 1_i$ sont transmises. Dans l'exemple considéré plus haut, ce nombre est égal à quatre (9-5=4 ; 18-14=4 ; etc.). Ceci est avantageux car la valeur de $\Delta 1_i$ est ainsi comprise entre 0 (lorsque l'information $CSI_i$ et l'information $\Delta 1_i$ sont transmises dans l'intervalle de temps S venant dans la structure de trame immédiatement avant l'intervalle de temps T à partir duquel la séquence $c_i$ est transmise) et 7. La valeur $\Delta 1_i$ peut donc être codée sur 3 bits seulement. On notera que si la valeur $\Delta 1_i$ était comptée en nombre de paquets de phonie (ce qui constitue une variante possible), elle pourrait prendre une valeur entre 0 et 16, et devrait donc être codée sur 4 bits.

Les étapes ci-dessus sont répétées pour chaque séquence de données en clair $m_i$ pendant l'alternat en cours.

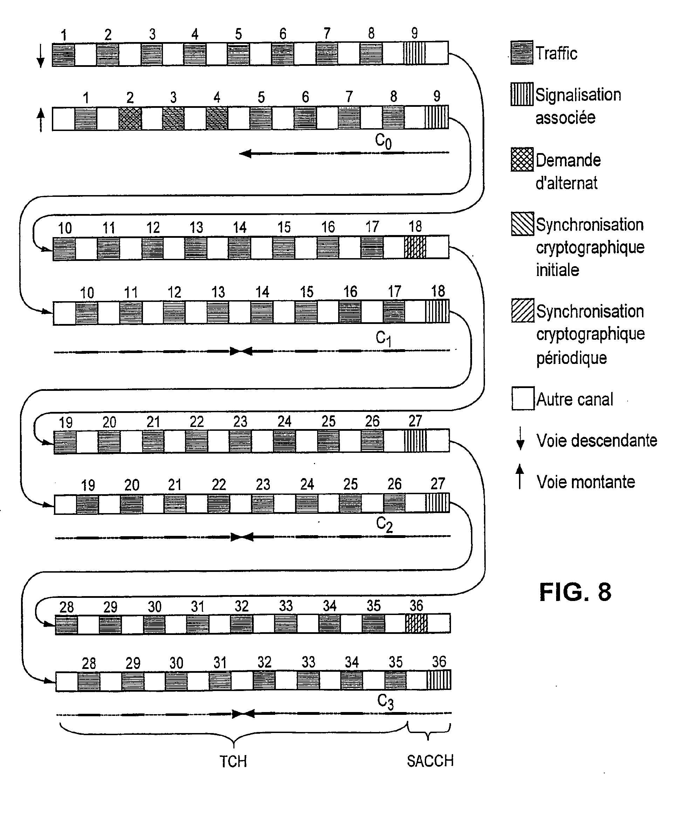

La figure 8 est un diagramme qui illustre la transmission, dans une super-trame déterminée, des quatre premières séquences de données chiffrées $c_0$ à $c_3$, d'un alternat déterminé, par un terminal émetteur déterminé, conformément à l'exemple envisagé dans ce qui précède. L'étalement des données chiffrées de chaque séquence dans la super-trame est symbolisé par des flèches horizontales respectives, qui sont en trait continu en regard des intervalles de temps du canal de trafic dans lesquels des données sont émises, et en trait discontinu sinon.

Conformément à cet exemple, sont transmises sur la voie montante : la demande d'alternat dans l'intervalle de temps 2 ; l'information de synchronisation initiale $CSI_0$ dans les intervalles de temps 3 et 4 ; les séquences $c_0$, $c_1$, $c_2$ et $c_3$ à partir, respectivement, des intervalles de temps 5, 14, 23, et 32 ; l'information de synchronisation périodique $CSI_1$ et l'information relative au décalage temporel $\Delta 1_1$ correspondante dans l'intervalle de temps de signalisation 18 ; ainsi que l'information de synchronisation périodique $CSI_3$ et l'information relative au décalage temporel $\Delta 1_3$ correspondante dans l'intervalle de temps de signalisation 36. On rappelle que dans cet exemple les informations $\Delta 1_1$ et $\Delta 1_3$ sont égales à 4. On notera que la transmission de la séquence $c_3$ se poursuit dans la super-trame suivante (non représentée).

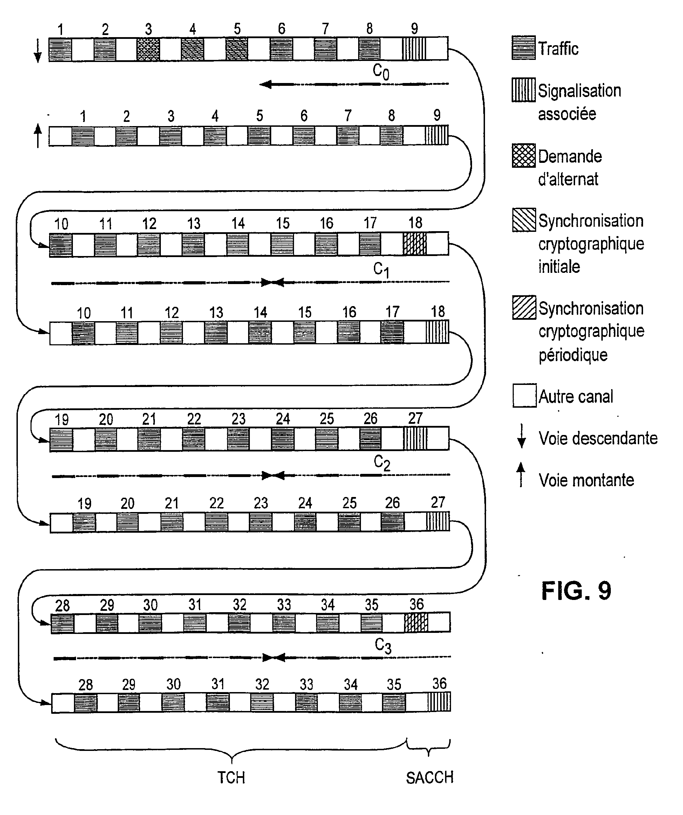

A la figure 9, illustre la réception des mêmes séquences de données chiffrées $c_0$, $c_1$, $c_2$ et $c_3$ par le terminal récepteur dans une super-trame déterminée.

L'encapsulation des données dans la super-trame considérée est gérée par la station de base. Compte tenu de l'écart de synchronisation radio entre la cellule du terminal émetteur et celle du terminal récepteur, il peut arriver, comme c'est le cas dans l'exemple représenté, qu'il existe un décalage de numéros d'intervalles de temps entre les données reçues par la station de base de la cellule du terminal émetteur et celles transmises par la station de base de la cellule du terminal récepteur.

Dans cet exemple, en effet, la demande d'alternat (accordée) de l'émetteur est reçue dans la cellule du récepteur dans l'intervalle de temps 3. De même, les informations $CSI_0$ sont reçues dans les intervalles de temps 4 et 5. Les séquences $c_0$, $c_1$, $c_2$ et $c_3$ sont reçues à partir, respectivement, des intervalles de temps 6, 15, 24, et 33. Toutefois, l'information de synchronisation périodique $CSI_1$ et l'information relative au décalage temporel $\Delta 1_1$ correspondante sont toujours reçues dans l'intervalle de temps de signalisation 18. De même, l'information de synchronisation périodique

$CSI_3$ et l'information relative au décalage temporel $\Delta 1_3$ correspondante sont toujours reçues dans l'intervalle de temps de signalisation 36. C'est pourquoi la valeur des informations $\Delta 1_1$ et $\Delta 1_3$ est modifiée par l'infrastructure fixe en sorte de tenir compte de l'agencement des séquences de données chiffrées dans la super-trame dans la cellule du terminal récepteur. Dans cet exemple, leur valeur est changée de 4 en 3.

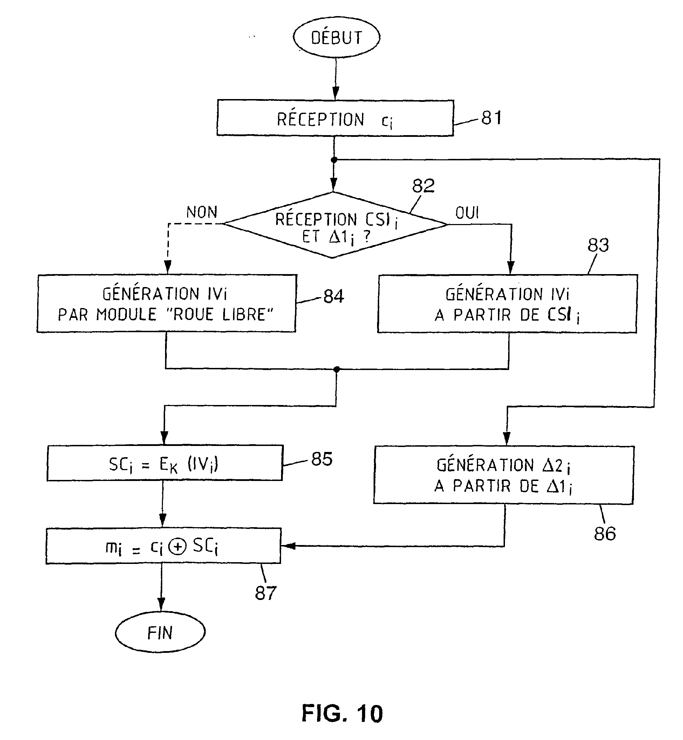

On va maintenant décrire le déchiffrement d'une séquence de données chiffrées par le terminal récepteur, conformément à un autre aspect de l'invention, en référence au diagramme d'étape de la figure 10.

Dans un étape 81, le terminal récepteur reçoit une séquence de données chiffrées $c_i$ dans le canal de trafic, à partir d'un intervalle de temps T déterminé, dans une super-trame déterminée. Cette séquence est délivrée par le circuit 51 du circuit 44 de traitement des données reçues. Si la séquence $c_i$ est reçue à partir de l'un des intervalles de temps 1, 10 19 et 29, c'est-à-dire le premier intervalle de temps d'une des quatre trames de ladite super-trame déterminée, on se demande alors, dans une étape 82, si on a reçu l'information de synchronisation $CSI_i$ (et donc aussi l'information $\Delta 1_i$) dans l'intervalle de temps de signalisation S précédent, à savoir, respectivement l'intervalle de temps 36 de la super-trame précédente, l'intervalle 9, l'intervalle 18 ou l'intervalle 27. Si au contraire la séquence $c_i$ est reçue à partir d'un autre des intervalles de temps de trafic T de la super-trame, alors, à l'étape 82, on se demande si on a reçu l'information de synchronisation $CSI_i$ (et donc aussi l'information $\Delta 1_i$) dans l'intervalle de temps de signalisation S suivant, à savoir l'un des intervalles 9, 18, 27, et 36.

Si la réponse à la question du test 82 est oui, alors, dans une étape 83, l'unité 55 génère la valeur courante $IV_i$ du vecteur d'initialisation à partir de la valeur de l'information $CSI_i$ reçue. Pour cela, on considère les Q3 LSB et les Q1 MSB de la valeur $CSI_i$ reçue, qui forment respectivement les Q3 LSB et les Q1 MSB de la valeur $IV_i$, d'une part, et les Q2 MSB de la valeur du compteur d'intervalles de temps dans la cellule considérée (celle du terminal récepteur), qui forment les Q2 bits intermédiaires de la valeur $IV_i$, d'autre part. Le lecteur peut se référer à la description ci-dessus des figures 6 et 7.

Si au contraire la réponse à cette question est non, alors, dans une étape 84, la valeur courante $IV_i$ est générée par le module de "roue libre" 67 de l'unité 55. On notera qu'en réalité la valeur $\Delta 1_i$ est constante pour toute la durée de l'alternat en cours, en sorte que le terminal qui est partie à la communication peut conserver en mémoire la valeur reçue initialement, c'est-à-dire en début d'alternat, et ne pas tenir compte des valeurs reçues ensuite durant le même alternat.

On notera que la mise en oeuvre de l'étape 84 ci-dessus n'est possible que pour un terminal récepteur qui est déjà partie à la communication, et non pour un terminal récepteur en phase d'entrée tardive. Un tel terminal devra attendre la réception effective de l'information $CSI_i$ (et donc aussi l'information $\Delta 1_i$) pour pouvoir commencer à déchiffrer les séquences de données chiffrées reçues. C'est pourquoi, à la figure, le chemin passant par le bloc symbolisant l'étape 84 est représenté en traits discontinus. On notera toutefois que, selon l'invention, l'information $CSI_i$ n'étant pas transmise par vol de trame, mais dans des intervalles de temps de signalisation, la périodicité de l'émission de cette information peut sans inconvénients être plus élevée que dans l'art antérieur. La seule contrainte est la disponibilité de ressources dans le canal de signalisation associée SACCH.

Dans une étape 85, le générateur 58 génère ensuite la séquence cryptographique $SC_i$ à partir de la valeur courante du vecteur d'initialisation $IV_i$ produite à l'étape 83 ou à l'étape 84, suivant la relation (1) donnée en introduction. Parallèlement aux étapes 82 à 85, l'unité 55 génère l'information $\Delta 2_i$ à partir de l'information $\Delta 1_i$ courante. On notera que, de même que pour l'information $\Delta 1_i$ (voir paragraphe ci-dessus), la valeur de l'information $\Delta 2_i$ est constante pour toute la durée de l'alternat en cours. L'étape 85 peut donc n'être exécutée par un terminal récepteur qu'une seule fois au début de l'alternat, ou lors de l'entrée tardive dans la communication, selon le cas. Ensuite la valeur $\Delta 2_i$ peut être conservée en mémoire jusqu'au début de l'alternat suivant.

La génération de l'information $\Delta 2_i$ à partir de l'information $\Delta 1_i$ revient à convertir l'information $\Delta 1_i$ exprimée en nombre d'intervalles de temps en une information $\Delta 2_i$ correspondante exprimée en nombre de paquets de phonie. Cette conversion peut être effectuée à l'aide d'une table de valeurs stockée en mémoire, qui est illustrée par le tableau de la figure 11. Ce tableau se comprend en considérant le diagramme et le tableau des figures respectivement 3a et 3b.

Dans une étape 87, l'opérateur OU-Exclusif 56 restitue la séquence de données en clair $m_i$ à partir de la séquence de données chiffrées $c_i$ et de la séquence cryptographique $SC_i$, suivant la relation (3) donnée en introduction, et en fonction en outre de l'information $\Delta 2_i$. Plus exactement, la séquence $SC_i$ est combinée à la séquence $c_i$ après

décalage de ses bits vers la droite d'un nombre de bits égal à $\Delta 2_i \times \dfrac{N}{P}$, où on rappelle que N désigne la longueur en nombre de bits de la séquence $SC_i$, et P désigne le nombre de trames de phonie dans une trame TDMA. Ceci est réalisé simplement au moyen d'un pointeur dans le registre à décalage 57, qui est décalé de $\Delta 2_i \times \dfrac{N}{P}$ rangs dans le registre.

Il résulte de ce décalage que, pour un terminal entrant de manière tardive dans la communication, alors qu'un alternat est en cours, les paquets de phonie de la séquence $c_i$ qui ont été reçus avant l'intervalle de temps S dans lequel

l'information $CSI_i$ et l'information $\Delta 1_i$ sont reçues pour la première fois, ne sont pas déchiffrés. On notera que toutes les séquences de données chiffrées reçues ultérieurement sont néanmoins déchiffrées dans leur intégralité.

La figure 12 illustre une configuration de changement de cellule ("handover") concernant un terminal mobile récepteur MTR qui est en communication avec un terminal mobile émetteur MTE. On suppose que le terminal MTR se trouve dans une cellule A (cellule d'origine) et se dirige vers une autre cellule B (cellule cible), et que le terminal MTE se trouve dans une troisième cellule C. Chacune des cellules A, B et C est couverte, du point de vue radio, par une station de base respectivement BTSA, BTSB et BTSC. Ces stations de base sont reliées au réseau de l'infrastructure.fixe du système de radiocommunications cellulaire.

En référence à la configuration de la figure 12, on va maintenant présenter une solution pour maintenir la synchronisation cryptographique lors du "handover" d'un terminal récepteur au cours d'une communication chiffrée de bout en bout.

Lors du "handover" du terminal MTR, de la cellule A vers la cellule B, une technique selon l'art antérieur classique consisterait à ne fournir au terminal MTR, dans la commande de changement de cellule transmise sur le canal de signalisation associée, que les informations purement radio lui permettant de se synchroniser d'un point de vue radio sur le canal voulu dans la cellule B. Une fois dans la cellule B, le terminal devrait attendre la réception des informations de synchronisation cryptographiques transmises par la technique décrite précédemment pour réaliser la synchronisation cryptographique. Jusqu'à la réception de cette information, le terminal MTR ne pourrait déchiffrer les données reçues, en sorte que la communication serait coupée, et ce bien que le "handover" soit déjà réalisé avec succès. Cette technique se traduit donc par une synchronisation cryptographique tardive, en raison de cette l'attente de l'information de synchronisation cryptographique sur le canal de trafic dans la cellule cible, et donc par une coupure de la communication beaucoup plus longue que celle due au "handover" proprement dit.

Dans un mode de réalisation de l'invention, on utilise à nouveau les compteurs d'intervalles de temps dans la cellule source et dans la cellule cible pour résoudre ce problème. Il convient de noter ici que le compteur d'intervalles de temps prend en compte les intervalles de temps élémentaires, et non les intervalles de temps composites de la structure de trame. Par conséquent, le nombre d'intervalles de temps dont il question ici est, sauf mention contraire, à considérer en référence au nombre d'intervalles de temps élémentaires, c'est-à-dire en tenant compte des intervalles de temps à la fois sur la voie montante et sur la voie descendante. Par exemple, la longueur d'une trame TDMA correspond ainsi à 72 unités (36x2) du compteur d'intervalles de temps de la cellule considérée.

En substance, la station de base BTSA fournit au terminal MTR dans la commande de changement de cellule transmise sur le canal de signalisation associée de la cellule A, outre les informations de nature radioélectrique qui lui permettent de se synchroniser sur le canal voulu dans la cellule B, une information relative au décalage de synchronisation cryptographique entre la cellule source et la cellule cible, qui est obtenue de la manière qui va maintenant être exposée. Cette information s'exprime comme l'écart $\Delta_{CPT}$ entre les compteurs d'intervalles de temps respectifs de la cellule source et de la cellule cible.

La station de base BTSB de la cellule B commence à recevoir du réseau, pendant une phase transitoire de la procédure de changement de cellule, des paquets de phonie chiffrés qui sont destinés à être émis sur la voie descendante du canal qui va porter la communication dans la cellule B entre elle-même et le terminal MTR (ci-après canal cible). Ces paquets de phonie portent une estampille temporelle insérée par le réseau pour permettre d'en vérifier le bon séquencement et l'absence de perte. Elle est nécessaire en raison du fait que le temps de transfert des paquets de phonie à travers le réseau peut être variable d'un paquet à un autre, et qu'en outre certains paquets peuvent être perdus lors de la transmission à travers le réseau. Cette estampille temporelle est naturellement synchronisée avec la valeur du compteur d'intervalles de temps de la cellule A.

La station BTSB retransmet alors vers la station de base BTSA de la cellule A une information composée de la valeur du compteur d'intervalles de temps dans la cellule B correspondant à la transmission sur le canal cible d'un paquet de phonie déterminé, ayant été reçu du réseau, d'une part, et l'estampille temporelle correspondante portée par ledit paquet de phonie reçu, d'autre part.

Sur la base de cette information, la station de base BTSA de la cellule source peut aisément calculer le décalage de synchronisation cryptographique entre les deux stations de base en comparant la valeur reçue à la valeur $CA_i$ de son propre compteur d'intervalles de temps correspondant à l'intervalle de temps d'émission du paquet de phonie considéré (c'est-à-dire correspondant à une estampille temporelle donnée). Elle transmet alors une information de décalage de synchronisation cryptographique au terminal MTR dans la commande de changement de cellule. Une convention possible est de transmettre la différence $\Delta_{CPT}$ entre les valeurs $CB_i$ et $CA_i$, respectivement du compteur de numéro d'intervalles de temps dans la cellule cible B et du compteur de numéro d'intervalles de temps dans la cellule source A, correspondant par exemple au début de la même séquence cryptographique c'est-à-dire à l'intervalle de temps S à l'intérieur duquel une information de synchronisation cryptographique $CSI_i$ y a été ou aurait pu y être transmise.

Cette différence $\Delta_{CPT}$ est facile à obtenir en fonction des informations transmises par la station de base BTSB de la cellule cible à la station de base BTSA de la cellule source comme indiqué ci-dessus. Dit autrement, si la commande de changement de cellule est transmise au cours de l'intervalle de temps de signalisation pour lequel le compteur d'intervalles de temps dans la cellule source A vaut $CA_i$, correspondant à l'intervalle de temps à l'intérieur duquel aurait été transmise l'information de synchronisation cryptographique $CSI_i$ pour une séquence cryptographique $SC_i$ déterminée, la valeur de l'information de décalage de synchronisation cryptographique $\Delta_{CPT}$ transmise avec la commande de changement de cellule est alors égale à $CB_i - CA_i$, où $CB_i$ est la valeur du compteur d'intervalles de temps dans la cellule cible B au début de la même séquence cryptographique $SC_i$.

Le terminal MTR connaît, par scrutation des cellules voisines et en particulier de la cellule cible B, la valeur du compteur d'intervalles de temps dans chacune de ces cellules. Il est alors capable de déterminer, grâce à l'utilisation de l'algorithme de "roue libre", la valeur de l'information de synchronisation cryptographique $CS_i$ à utiliser pour le déchiffrement d'une séquence de données chiffrées $c_i$ reçue via le canal cible (i.e., le canal alloué à la communication dans la cellule B), et la position temporelle du début de la séquence cryptographique à laquelle cette valeur correspond (et qui est normalement déterminée par l'information qui est notée $\Delta 1_i$ dans ce qui précède). Il peut alors se synchroniser immédiatement non seulement du point de vue radio, mais également du point de vue de la cryptographie de bout en bout, et ce sans attendre la réception effective d'une information de synchronisation cryptographique $CSI_i$. On évite ainsi toute coupure de communication supplémentaire préjudiciable à la qualité de service.

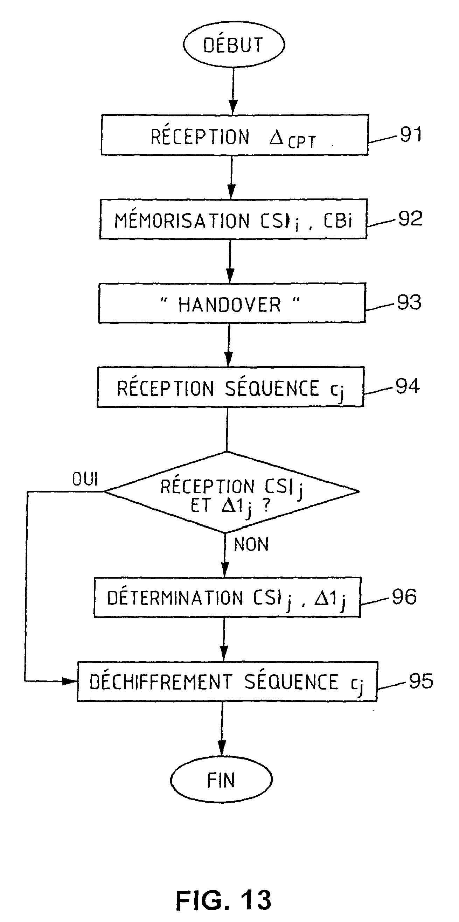

Le diagramme de la figure 13 illustre une séquence d'étapes d'un algorithme permettant de maintenir la synchronisation cryptographique pour le terminal MTR entre les cellules A et B.

Avant de quitter la cellule A, le terminal MTR reçoit, dans une étape 91, une information de décalage de synchronisation cryptographique $\Delta_{CPT}$, relative au décalage de synchronisation cryptographique entre la cellule source A et la cellule cible B. Cette information $\Delta_{CPT}$ est calculée par la station de base BTSA de la cellule A comme il a été dit plus haut. Dans un exemple, l'information $\Delta_{CPT}$ est transmise par la station de base BTSA au terminal MTR avec la commande de changement de cellule dans un intervalle de temps S déterminé sur le canal de transmission alloué à la communication dans la cellule A.

Dans une étape 92, le terminal MTR mémorise la valeur d'une première information de synchronisation cryptographique $CSI_i$ déterminée, qui peut tout simplement être la valeur courante de l'information de synchronisation cryptographique au moment où la commande de changement de cellule est reçue. Il mémorise également la valeur $CB_i$ du compteur d'intervalles de temps de la cellule source B correspondant à l'intervalle de temps S dans lequel l'information $CSI_i$ a été reçue (dans le cas où c'est une valeur qui a effectivement été reçue) ou aurait pu être reçue (dans le cas où c'est une valeur qui a été générée au moyen de l'algorithme "de roue libre"). Cette valeur $CB_i$ est obtenue en ajoutant la valeur $\Delta_{CPT}$ à la valeur $CA_i$ c'est-à-dire en faisant $CB_i = CA_i + \Delta_{CPT}$.

Dans une étape 93, le terminal MTR effectue le changement de cellule. Par conséquent, il passe du canal de transmission alloué à la communication dans la cellule A au canal de transmission alloué à la communication dans la cellule B.

Dans une étape 94, il reçoit une séquence de paquets de données chiffrés $c_j$ déterminée, à l'intérieur d'un intervalle de temps T déterminé sur le canal de transmission alloué à la communication dans la cellule B. Il s'agit de la première séquence de paquets de données chiffrés qu'il reçoit après son transfert dans la cellule B.

Si le terminal MTR reçoit également la valeur de l'information de synchronisation cryptographique $CSI_j$ à utiliser pour le déchiffrement de la séquence $c_j$ (et par conséquent, également la valeur de l'information de retard de synchronisation cryptographique $\Delta 1_j$ associée correspondante), alors, dans une étape 95, il effectue le déchiffrement de la séquence $c_j$ à partir des valeurs $CSI_j$ et $\Delta 1_j$ reçues. Ce déchiffrement a lieu de la manière précédemment indiquée (en référence au diagramme d'étapes de la figure 10). Un tel cas est celui, par exemple, de la séquence $c_1$ ou de la séquence $c_3$ à la figure 9.

En l'absence de réception des valeurs $CSI_j$ et $\Delta 1_j$, le terminal MTR détermine, dans une étape 96, la valeur $CSI_j$ ainsi que la valeur $\Delta 1_j$, à partir de la valeur $CB_i$ du compteur d'intervalles de temps dans la cellule source et de la valeur de l'information de synchronisation cryptographique $CSI_i$, qu'il a mémorisées à l'étape 92, et à partir en outre de la valeur $CB_j$ du compteur d'intervalles de temps correspondant à l'intervalle de temps S dans lequel l'information de synchronisation cryptographique $CSI_j$ aurait pu être reçue sur le canal de transmission alloué à la communication dans la cellule B. Un tel cas est celui, par exemple, de la séquence $c_2$ à la figure 9, l'intervalle de temps S dans lequel l'information de synchronisation cryptographique $CSI_2$ aurait pu être reçue étant l'intervalle 27 sur cette figure. Puis le terminal saute à l'étape 95, à laquelle il effectue le déchiffrement de la séquence $c_j$ à partir des valeurs $CSI_j$ et $\Delta 1_j$ qu'il a ainsi déterminées.

Un exemple des opérations détaillées qui sont effectuées lors de l'étape de détermination 96 est donnée ci-après.

En arrivant dans la cellule B, le terminal MTR détermine la valeur CBj du compteur d'intervalles de temps dans la cellule B, qui correspond à l'intervalle de temps où aurait été émise l'information de synchronisation cryptographique $CSI_j$ avant son arrivée dans la cellule B.

Le terminal MTR calcule ensuite la différence $\Delta_{CPT}' = CB_j - CB_i$ qui peut être positive (ce qui signifie que la séquence cryptographique $SC_j$ a commencé dans le passé) ou négative (ce qui signifie que la séquence cryptographique

$SC_j$ commencera dans le futur).

Le terminal alors effectue la division euclidienne de $\Delta_{CPT}'$ par le nombre 2xP d'intervalles de temps (élémentaires) séparant deux intervalles de temps de signalisation S dans la structure de trame, et qui correspond également à la longueur d'une séquence cryptographique. On rappelle que, dans l'exemple considéré ici, 2xP est égal à 72. Le diviseur est appelé $\Delta_S$ et le reste est appelé $\Delta_{IT}$ dans la suite. Dit autrement, on a la relation :

$$\Delta_{CPT}' = \Delta_S \times (2 \times P) + \Delta_{IT} \qquad (5)$$

Le terminal MTR fait alors tourner l'algorithme de "roue libre" du module 67 de l'unité 55 un nombre de fois égal à $\Delta_S$ (en appliquant l'algorithme $\Delta_S$ fois si $\Delta_S$ est positif, ou l'algorithme inverse un nombre de fois égal à abs($\Delta_S$) si $\Delta_S$ est négatif). Le résultat donne une nouvelle valeur du vecteur d'initialisation $IV_j$ qui permet au générateur 58 de générer une nouvelle information de synchronisation cryptographique SCj.

Le reste $\Delta_{IT}$ (compté en intervalles de temps élémentaires) est divisé par deux pour obtenir le décalage en intervalle de temps composites correspondant au nombre d'intervalles de temps (élémentaires) sur la seule voie descendante du canal de transmission (dans le cas d'un système TDMA d'ordre 2 correspondant à l'exemple considéré ici). Cette valeur $\Delta_{IT} / 2$ est la valeur de l'information de retard de synchronisation cryptographique $\Delta 1_j$ correspondant à la séquence cryptographique $SC_j$.

Dit autrement, le terminal se synchronise du point de vue de la cryptographie à partir de l'information de synchronisation cryptographique CSI et de l'information de retard de synchronisation cryptographique $\Delta 1_j = \Delta_{IT}/2$, ainsi obtenues, avaient été reçues d'une manière associée à la séquence de paquets de données chiffrés $c_j$. Il n'y a donc aucun retard de rétablissement de la communication dans la cellule cible B dû à la synchronisation cryptographique.

## Revendications

1. Procédé de transmission de données chiffrées entre un terminal mobile émetteur (MTE) et au moins un terminal mobile récepteur (MTR) d'un système de radiocommunications numériques, à travers un canal de transmission radio avec une structure de trame dans laquelle une trame TDMA comprend des intervalles de temps (T) d'un premier type formant un canal de trafic pour la transmission d'informations de trafic et au moins un intervalle de temps (S) d'un second type formant un canal de signalisation associée pour la transmission d'informations de signalisation,
   suivant lequel une séquence ($c_i$) de paquets de données chiffrés est transmise dans le canal de trafic à partir d'un intervalle de temps du premier type (14,32) déterminé, alors qu'une information de synchronisation cryptographique (CSI$_i$) associée est transmise dans le canal de signalisation associé à l'intérieur d'un intervalle de temps du second type (18,36) déterminé, et suivant lequel une information ($\Delta 1_i$) de retard de synchronisation cryptographique relative à l'écart temporel entre ledit intervalle de temps du second type déterminé et ledit intervalle de temps du premier type déterminé, est également transmise dans le canal de signalisation associée.

2. Procédé de transmission selon la revendication 1, suivant lequel la valeur de l'information de synchronisation cryptographique est dérivée de la valeur d'un vecteur d'initialisation (IV$_i$) ayant servi à générer une séquence cryptographique (SC$_i$) utilisée pour le chiffrement de ladite séquence de paquets de données chiffrés.

3. Procédé de transmission selon la revendication 2, suivant lequel la longueur de la séquence cryptographique est égale à un nombre entier N déterminé de bits, qui correspond au nombre de bits utiles transmis entre deux intervalles de temps du second type consécutifs dans lesquels une information de synchronisation cryptographique peut être transmise.

4. Procédé de transmission selon la revendication 3, suivant lequel le nombre N est un multiple entier d'un nombre entier M déterminé qui correspond au nombre de bits d'un paquet de données chiffré.

5. Procédé de transmission selon l'une quelconque des revendications précédentes, suivant lequel ladite information de retard de synchronisation cryptographique est le nombre d'intervalles de temps du premier type séparant ledit intervalle de temps du premier type déterminé et ledit intervalle de temps du second type déterminé.

6. Procédé de transmission selon l'une quelconque des revendications précédentes, suivant lequel ladite information de retard de synchronisation cryptographique est transmise à l'intérieur dudit intervalle de temps du second type déterminé avec ladite information de synchronisation cryptographique.

7. Procédé de transmission selon l'une quelconque des revendications précédentes, suivant lequel ledit intervalle de temps du second type (18,36) déterminé est l'intervalle de temps du second type venant dans la structure de trame immèdiatement avant, ou le premier intervalle de temps du second type venant dans la structure de trame après ledit intervalle de temps du premier type déterminé(14,32).

8. Procédé de transmission selon l'une quelconque des revendications précédentes, suivant lequel la valeur de l'information de synchronisation cryptographique est initialisée, en début d'alternat, à une valeur déterminée codée sur un nombre entier Q déterminé de bits, et obtenue comme la concaténation binaire d'un nombre entier Q1 déterminé de premiers bits codant une valeur aléatoire d'une part, et d'un nombre entier Q2 déterminé de seconds bits qui sont les bits de poids le plus faible de la valeur d'un compteur d'intervalles de temps d'autre part, où Q, Q1 et Q2 sont des nombres entiers déterminés.

9. Procédé de déchiffrement d'une séquence de paquets de données chiffrés ($c_i$) transmise entre un terminal mobile émetteur (MTE) et au moins un terminal mobile récepteur (MTR) d'un système de radiocommunications numériques, à travers un canal de transmission radio avec une structure de trame dans laquelle une trame TDMA comprend des intervalles de temps (T) d'un premier type formant un canal de trafic pour la transmission d'informations de trafic et au moins un intervalle de temps (S) d'un second type formant un canal de signalisation associée pour la transmission d'informations de signalisation, comprenant les étapes consistant à :

a) recevoir ladite séquence de paquets de données chiffrés à partir d'un intervalle de temps du premier type (6, 15, 24,33) déterminé ;
b) recevoir une information de synchronisation cryptographique ($CSI_i$) associée dans le canal de signalisation associée, à l'intérieur d'un intervalle de temps du second type (18,36) déterminé, et, ,
c) recevoir également, dans le canal de signalisation associée, une information ($\Delta 1_i$) de retard de synchronisation cryptographique relative à l'écart temporel entre ledit intervalle de temps du second type déterminé et ledit intervalle de temps du premier type déterminé ;
d) générer une valeur ($IV_i$) d'un vecteur d'initialisation ayant servi à générer une séquence cryptographique ($SC_j$) utilisée pour le chiffrement de ladite séquence de paquets de données chiffrés ;
e) générer la même séquence cryptographique ($SC_i$), à partir de la valeur du vecteur d'initialisation générée à l'étape d) ;
f) décaler la séquence cryptographique générée à l'étape e) en fonction de ladite information ($\Delta 1_i$) de retard de synchronisation cryptographique ; et,
g) déchiffrer ladite séquence de paquets de données chiffrés ($c_i$) à partir de ladite séquence cryptographique décalée.

10. Procédé de déchiffrement selon la revendication 9, suivant lequel, à l'étape d), la valeur ($IV_i$) du vecteur d'initialisation est dérivée de la valeur de l'information de synchronisation cryptographique ($CSI_i$) reçue à l'étape b).

11. Procédé de déchiffrement selon la revendication 9, suivant lequel, en l'absence de réception de la valeur de l'information de synchronisation cryptographique ($CSI_i$) conformément à l'étape b), la valeur ($IV_i$) du vecteur d'initialisation est, à l'étape d), générée à l'aide d'un algorithme "de roue libre" à partir d'une valeur antérieure de l'information de synchronisation cryptographique.

12. Procédé de déchiffrement selon l'une quelconque des revendications 9 à 11 , suivant lequel, l'information ($\Delta 1_i$) de retard de synchronisation cryptographique étant exprimée en nombre d'intervalles de temps, l'étape f) comprend la génération d'une information ($\Delta 2_i$) correspondante exprimée en nombre de paquets de données.

13. Procédé de déchiffrement selon l'une quelconque des revendications 9 à 12, suivant lequel, lors d'un changement de cellule du terminal mobile récepteur, d'une cellule source (A) déterminée vers une cellule cible (B) déterminée, le terminal mobile récepteur :

h) reçoit une information de décalage de synchronisation cryptographique ($\Delta_{CPT}$), relative au décalage de synchronisation cryptographique entre la cellule source et la cellule cible, qui est transmise avec la commande de changement de cellule dans un intervalle de temps du second type déterminé sur le canal de transmission alloué à la communication dans la cellule source ;
i) mémorise la valeur d'une première information de synchronisation cryptographique ($CSI_i$) déterminée et une

première valeur ($CB_i$) du compteur d'intervalles de temps de la cellule cible correspondant à l'intervalle de temps du second type dans lequel ladite information de synchronisation cryptographique aurait pu être reçue ;

j) effectue le changement de cellule ;

k) reçoit une séquence de paquets de données chiffrés ($c_j$) déterminée, à partir d'un intervalle de temps du premier type (24) déterminé sur le canal de transmission alloué à la communication dans la cellule cible ; et,

l) en l'absence de réception conformément à l'étape b) de la valeur d'une seconde information de synchronisation cryptographique ($CSI_j$), à utiliser pour le déchiffrement de ladite séquence de paquets de données chiffrés ($c_j$), détermine la valeur de ladite seconde information de synchronisation cryptographique ($CSI_j$), ainsi que la valeur de l'information de retard de synchronisation cryptographique ($\Delta 1_j$) associée correspondante, à partir de ladite première valeur ($CB_i$) du compteur d'intervalles de temps dans la cellule cible, de la valeur de ladite première information de synchronisation cryptographique ($CSI_i$), et en outre d'une seconde valeur ($CB_j$) du compteur d'intervalles de temps dans la cellule cible correspondant à l'intervalle de temps du second type dans lequel ladite seconde information de synchronisation cryptographique ($CSI_j$) aurait pu être reçue sur le canal de transmission alloué à la communication dans la cellule cible.

**14.** Dispositif de transmission de données chiffrées entre un terminal mobile émetteur (MTE) et au moins un terminal mobile récepteur (MTR) d'un système de radiocommunications numériques, à travers un canal de transmission radio avec une structure de trame dans laquelle une trame TDMA comprend des intervalles de temps (T) d'un premier type formant un canal de trafic pour la transmission d'informations de trafic et au moins un intervalle de temps (S) d'un second type formant un canal de signalisation associée pour la transmission d'informations de signalisation, comprenant :

- des moyens pour transmettre une séquence ($c_i$) de paquets de données chiffrés dans le canal de trafic à partir d'un intervalle de temps du premier type (14,32) déterminé, et pour transmettre une information de synchronisation cryptographique ($CSI_i$) associée dans le canal de signalisation associée à l'intérieur d'un intervalle de temps du second type (18,36) déterminé, et

- des moyens pour transmettre également dans le canal de signalisation associée, une information ($\Delta 1_j$) de retard de synchronisation cryptographique relative à l'écart temporel entre ledit intervalle de temps du second type déterminé et ledit intervalle de temps du premier type déterminé.

**15.** Dispositif de transmission selon la revendication 14, comprenant en outre des moyens pour dériver la valeur de l'information de synchronisation cryptographique de la valeur d'un vecteur d'initialisation ($IV_i$) ayant servi à générer une séquence cryptographique ($SC_i$) utilisée pour le chiffrement de ladite séquence de paquets de données chiffrés.

**16.** Dispositif de transmission selon la revendication 15, dans lequel la longueur de la séquence cryptographique est égale à un nombre entier N déterminé de bits, qui correspond au nombre de bits utiles transmis entre deux intervalles de temps du second type consécutifs dans lesquels une information de synchronisation cryptographique peut être transmise.

**17.** Dispositif de transmission selon la revendication 16, suivant lequel le nombre N est un multiple entier d'un nombre entier M déterminé qui correspond au nombre de bits d'un paquet de données chiffré.

**18.** Dispositif de transmission selon l'une quelconque des revendications 14 à 17, dans lequel ladite information de retard de synchronisation cryptographique est le nombre d'intervalles de temps du premier type séparant ledit intervalle de temps du premier type déterminé et ledit intervalle de temps du second type déterminé.

**19.** Dispositif de transmission selon l'une quelconque des revendications 14 à 18, dans lequel ladite information de retard de synchronisation cryptographique est transmise à l'intérieur dudit intervalle de temps du second type déterminé avec ladite information de synchronisation cryptographique.

**20.** Dispositif de transmission selon l'une quelconque des revendications 14 à 19, dans lequel ledit intervalle de temps du second type (18,36) déterminé est l'intervalle de temps du second type venant dans la structure de trame immédiatement avant, ou le premier intervalle de temps du second type venant dans la structure de trame après ledit intervalle de temps du premier type déterminé (14,32).

**21.** Dispositif de transmission selon l'une quelconque des revendications 14 à 20, comprenant des moyens pour, en début d'alternat, initialiser la valeur de l'information de synchronisation cryptographique à une valeur déterminée codée sur un nombre entier Q déterminé de bits, et obtenue comme la concaténation binaire d'un nombre entier Q1 déterminé de premiers bits codant une valeur aléatoire d'une part, et d'un nombre entier Q2 déterminé de seconds bits qui sont les bits de poids le plus faible de la valeur d'un compteur d'intervalles de temps d'autre part, où Q, Q1 et Q2 sont des nombres entiers déterminés.

22. Dispositif de déchiffrement d'une séquence de paquets de données chiffrés ($c_i$) transmise entre un terminal mobile émetteur (MTE) et au moins un terminal mobile récepteur (MTR) d'un système de radiocommunications numériques, à travers un canal de transmission radio avec une structure de trame dans laquelle une trame TDMA comprend des intervalles de temps (T) d'un premier type formant un canal de trafic pour la transmission d'informations de trafic et au moins un intervalle de temps (S) d'un second type formant un canal de signalisation associée pour la transmission d'informations de signalisation, comprenant :

a) des premiers moyens de réception pour recevoir ladite séquence de paquets de données chiffrés à partir d'un intervalle de temps du premier type (6,15, 24,33) déterminé ;
b) des seconds moyens de réception pour recevoir une information de synchronisation cryptographique ($CSI_i$) associée dans le canal de signalisation associée, à l'intérieur d'un intervalle de temps du second type (18, 36) déterminé, et,
c) des moyens de réception pour recevoir également, dans le canal de signalisation associée, une information ($\Delta 1_j$) de retard de synchronisation cryptographique relative à l'écart temporel entre ledit intervalle de temps du second type déterminé et ledit intervalle de temps du premier type déterminé ;
d) des premiers moyens de génération pour générer une valeur ($IV_i$) d'un vecteur d'initialisation ayant servi à générer une séquence cryptographique ($SC_i$) utilisée pour le chiffrement de ladite séquence de paquets de données chiffrés ;
e) des seconds moyens de génération, pour générer la même séquence cryptographique ($SC_i$), à partir de la valeur du vecteur d'initialisation générée par lesdits premiers moyens de génération ;
f) des moyens de décalage pour décaler la séquence cryptographique générée par lesdits seconds moyens de génération, en fonction de ladite information ($\Delta 1_j$) de retard de synchronisation cryptographique ; et,
g) des moyens pour déchiffrer ladite séquence de paquets de données chiffrés ($c_i$) à partir de ladite séquence cryptographique décalée.

23. Dispositif de déchiffrement selon la revendication 22, dans lequel lesdits premiers moyens de génération comprennent des moyens pour dériver la valeur ($IV_i$) du vecteur d'initialisation de la valeur de l'information de synchronisation cryptographique ($CSI_i$) reçue par lesdits moyens de réception.

24. Dispositif de déchiffrement selon la revendication 22, suivant lequel, en l'absence de réception de la valeur de l'information de synchronisation cryptographique ($CSI_i$) par lesdits premiers moyens de réception, lesdits premiers moyens de génération comprennent des moyens (67) pour générer la valeur ($IV_i$) du vecteur d'initialisation à l'aide d'un algorithme "de roue libre" à partir d'une valeur antérieure de l'information de synchronisation cryptographique.

25. Dispositif de déchiffrement selon l'une quelconque des revendications 22 à 24, dans lequel, l'information ($\Delta 1_i$) de retard de synchronisation cryptographique étant exprimée en nombre d'intervalles de temps, lesdits moyens de décalage comprennent des moyens pour générer d'une information ($\Delta 2_i$) correspondante exprimée en nombre de paquets de données.

26. Dispositif de déchiffrement selon l'une quelconque des revendications 22 à 24, comprenant en outre des moyens pour, lors d'un changement de cellule du terminal mobile récepteur, d'une cellule source (A) déterminée vers une cellule cible (B) déterminée :

h) recevoir une information de décalage de synchronisation cryptographique ($\Delta_{CPT}$), relative au décalage de synchronisation cryptographique entre la cellule source et la cellule cible, qui est transmise avec la commande de changement de cellule dans un intervalle de temps du second type déterminé sur le canal de transmission alloué à la communication dans la cellule source ;
i) mémoriser la valeur d'une première information de synchronisation cryptographique ($CSI_i$) déterminée et une première valeur ($CB_i$) du compteur d'intervalles de temps de la cellule cible correspondant à l'intervalle de temps du second type dans lequel ladite information de synchronisation cryptographique aurait pu tre reçue ;
j) effectuer le changement de cellule ;
k) recevoir une séquence de paquets de données chiffrés ($c_j$) déterminée, à partir d'un intervalle de temps du premier type (24) déterminé sur le canal de transmission alloué à la communication dans la cellule cible ; et,
l) en l'absence de réception par lesdits premiers moyens de réception de la valeur d'une seconde information

de synchronisation cryptographique ($CSI_j$) à utiliser pour le déchiffrement de ladite séquence de paquets de données chiffrés (cj), déterminer la valeur de ladite seconde information de synchronisation cryptographique ($CSI_j$), ainsi que la valeur de l'information de retard de synchronisation cryptographique ($\Delta 1_j$) associée correspondante, à partir de ladite première valeur ($CB_i$) du compteur d'intervalles de temps dans la cellule cible, de la valeur de ladite première information de synchronisation cryptographique ($CSI_i$), et en outre d'une seconde valeur ($CB_j$) du compteur d'intervalles de temps dans la cellule cible correspondant à l'intervalle de temps du second type dans lequel ladite seconde information de synchronisation cryptographique ($CSI_j$) aurait pu être reçue sur le canal de transmission alloué à la communication dans la cellule cible.

27. Terminal mobile d'un système de radiocommunications numériques, comprenant un dispositif de transmission selon l'une quelconque des revendications 14 à 21, et/ou un dispositif de déchiffrement selon l'une quelconque des revendications 22 à 26.

**Claims**

1. Method for transmitting encrypted data between a sender mobile terminal (MTE) and at least one receiver mobile terminal (MTR) of a digital radiocommunication system, through a radio transmission channel having a frame structure such that a TDMA frame comprises time slots (T) of a first type forming a traffic channel for the transmission of traffic information and at least one time slot (S) of a second type forming an associated signaling channel for the transmission of signaling information,
wherein a sequence ($c_i$) of encrypted data packets is transmitted in the traffic channel on the basis of a determined time slot of the first type (14,32), whereas an associated cryptographic synchronization information cue ($CSI_i$) is transmitted in the associated signaling channel inside a determined time slot of the second type (18,36), and wherein a cryptographic synchronization delay information cue ($\Delta 1_i$) relating to the time gap between said determined time slot of the second type and said determined time slot of the first type, is also transmitted in the associated signaling channel.

2. Transmission method according to claim 1, wherein the value of the cryptographic synchronization information cue is derived from the value of an initialization vector ($IV_i$) having served to generate a cryptographic sequence ($SC_i$) used for the encryption of said sequence of encrypted data packets.

3. Transmission method according to claim 2, wherein the length of the cryptographic sequence is equal to a determined whole number N of bits, which corresponds to the number of useful bits transmitted between two consecutive time slots of the second type in which a cryptographic synchronization information cue may be transmitted.

4. Transmission method according to claim 3, wherein the number N is a whole multiple of a determined whole number M which corresponds to the number of bits of an encrypted data packet.

5. Transmission method according to any of the preceding claims, wherein said cryptographic synchronization delay information cue is the number of time slots of the first type separating said determined time slot of the first type and said determined time slot of the second type.

6. Transmission method according to any of the preceding claims, wherein said cryptographic synchronization delay information cue is transmitted inside the determined time slot of the second type with said cryptographic synchronization information cue.

7. Transmission method according to any of the preceding claims, wherein said determined time slot of the second type (18,36) is the time slot of the second type coming in the frame structure immediately before, or the first time slot of the second type coming in the frame structure after said determined time slot of the first type (14,32).

8. Transmission method according to any of the preceding claims, wherein the value of the cryptographic synchronization information cue is initialized, at the start of PTT, to a determined value coded on a determined whole number Q of bits, and obtained as the binary concatenation of a determined whole number Q1 of first bits coding a random value on the one hand, and of a determined whole number Q2 of second bits which are the least significant bits of the value of a time slot counter on the other hand, where Q, Q1 and Q2 are determined whole numbers.

9. Method for decrypting a sequence of encrypted data packets ($c_i$) transmitted between a sender mobile terminal (MTE) and at least one receiver mobile terminal (MTR) of a digital radiocommunication system, through a radio transmission channel having a frame structure such that a TDMA frame comprises time slots (T) of a first type forming a traffic channel for the transmission of traffic information and at least one time slot (S) of a second type forming an associated signaling channel for the transmission of signaling information, comprising the steps of:

> a) receiving said sequence of encrypted data packets on the basis of a determined time slot of the first type (6,15,24,33);
> b) receiving an associated cryptographic synchronization information cue ($CSI_i$) in the associated signaling channel, inside a determined time slot of the second type (18, 36), and,
> c) also receiving, in the associated signaling channel, a cryptographic synchronization delay information cue ($\Delta 1_i$) relating to the time gap between said determined time slot of the second type and said determined time slot of the first type;
> d) generating a value ($IV_i$) of an initialization vector having served to generate a cryptographic sequence ($SC_j$) used for the encryption of said sequence of encrypted data packets;
> e) generating the same cryptographic sequence ($SC_i$), on the basis of the initialization vector value generated in step d);
> f) shifting the cryptographic sequence generated in step e) as a function of said cryptographic synchronization delay information cue ($\Delta 1_i$); and
> g) decrypting said sequence of encrypted data packets ($c_i$) on the basis of said shifted cryptographic sequence.

10. Decryption method according to claim 9, wherein, at step d), the value ($IV_i$) of the initialization vector is derived from the value of the cryptographic synchronization information cue ($CSI_i$) received at b).

11. Decryption method according to claim 9, wherein, in the absence of receipt of the value of the cryptographic synchronization information cue ($CSI_i$) according to step b), the value ($IV_i$) of the initialization is, at step d), generated with the aid of a "freewheel" algorithm on the basis of an earlier value of the cryptographic synchronization information cue.

12. Decryption method according to any of clams 9 to 11, wherein, the cryptographic synchronization delay information cue ($\Delta 1_i$) being expressed as a number of time slots, the step f) comprises the generation of a corresponding information cue ($\Delta 2_i$) expressed as a number of data packets.

13. Decryption method according to any of claims 9 to 12, wherein, upon a change of cell of the receiver mobile terminal, from a determined source cell (A) to a determined target cell (B), the receiver mobile terminal:

> h) receives a cryptographic synchronization shift information cue ($\Delta_{CPT}$), relating to the cryptographic synchronization shift between the source cell and the target cell, which is transmitted with the change of cell command in a determined time slot of the second type over the transmission channel allocated to the communication in the source cell;
> i) stores the value of a first determined cryptographic synchronization information cue ($CSI_i$) and a first value ($CB_i$) of the target cell's time slot counter corresponding to the time slot of the second type in which said cryptographic synchronization information cue could have been received;
> j) performs the change of cell;
> k) receives a determined sequence of encrypted data packets ($c_i$), on the basis of a determined time slot of the first type (24) over the transmission channel allocated to the communication in the target cell; and,
> l) in the absence of receipt as per step b) of the value of a second cryptographic synchronization information cue ($CSI_j$), to be used for the decryption of said sequence of encrypted data packets ($c_j$), determines the value of said second cryptographic synchronization information cue ($CSI_j$), as well as the value of the corresponding associated cryptographic synchronization delay information cue ($\Delta 1_j$), on the basis of said first value ($CB_i$) of the counter of time slots in the target cell, of the value of said first cryptographic synchronization information cue ($CSI_i$), and furthermore of a second value ($CB_j$) of the counter of time slots in the target cell corresponding to the time slot of the second type in which said second cryptographic synchronization information cue ($CSI_j$) could have been received over the transmission channel allocated to the communication in the target cell.

14. Device for transmitting encrypted data between a sender mobile terminal (MTE) and at least one receiver mobile terminal (MTR) of a digital radiocommunication system, through a radio transmission channel having a frame structure such that a TDMA frame comprises time slots (T) of a first type forming a traffic channel for the transmission of traffic information and at least one time slot (S) of a second type forming an associated signaling channel for the transmission of signaling information, comprising:

- means for transmitting a sequence ($c_i$) of encrypted data packets in the traffic channel on the basis of a determined time slot of the determined first type (14,32), and for transmitting an associated cryptographic synchronization information cue ($CSI_i$) in the associated signaling channel inside a determined time slot of the second type (18,36), and
- means for also transmitting in the associated signaling channel, a cryptographic synchronization delay information cue ($\Delta 1_j$) relating to the time gap between said determined time slot of the second type and said determined time slot of the first type.

15. Transmission device according to claim 14, further comprising means for deriving the value of the cryptographic synchronization information cue from the value of an initialization vector ($1V_i$) having served to generate a cryptographic sequence ($SC_i$) used for the encryption of said sequence of encrypted data packets.

16. Transmission device according to claim 15, wherein the length of the cryptographic sequence is equal to a determined whole number N of bits, which corresponds to the number of useful bits transmitted between two consecutive time slots of the second type in which a cryptographic synchronization information cue may be transmitted.

17. Transmission device according to claim 16, wherein the number N is whole multiple of a determined whole number M which corresponds to the number of bits of an encrypted data packet.

18. Transmission device according to any of claims 14 to 17, wherein the cryptographic synchronization delay information cue is the number of time slots of the first type separating said determined time slot of the first type and said determined time slot of the second type.

19. Transmission device according to any of claims 14 to 18, wherein the cryptographic synchronization delay information cue is transmitted inside said determined time slot of the second type with said cryptographic synchronization information cue.

20. Transmission device according to any of claims 14 to 19, wherein the determined time slot of the second type (18,36) is the time slot of the second type coming in the frame structure immediately before, or the first time slot of the second type coming in the frame structure after said determined time slot of the first type (14,32).

21. Transmission device according to any of claims 14 to 20, comprising means for, at the start of PTT, initializing the value of the cryptographic synchronization information cue to a determined value coded on a determined whole number Q of bits, and obtained as the binary concatenation of a determined whole number Q1 of first bits coding a random value on the one hand, and of a determined whole number Q2 of second bits which are the least significant bits of the value of a time slot counter on the other hand, where Q, Q1 and Q2 are determined whole numbers.

22. Device for decrypting a sequence of encrypted data packets ($c_i$) transmitted between a sender mobile terminal (MTE) and at least one receiver mobile terminal (MTR) of a digital radiocommunication system, through a radio transmission channel having a frame structure such that a TDMA frame comprises time slots (T) of a first type forming a traffic channel for the transmission of traffic information and at least one time slot (S) of a second type forming an associated signaling channel for the transmission of signaling information, comprising:

a) first means of reception for also receiving said sequence of encrypted data packets on the basis of a determined time slot of the first type (6,15,24,33);
b) second means of reception for, optionally, receiving an associated cryptographic synchronization information cue ($CSI_i$) in the associated signaling channel, inside a determined time slot of the second type (18,36), and,
c) means of reception for also receiving, in the associated signaling channel, a cryptographic synchronization delay information cue ($\Delta 1_j$) relating to the time gap between said determined time slot of the second type and said determined time slot of the first type;
d) first means of generation for generating a value ($IV_i$) of an initialization vector having served to generate a cryptographic sequence ($SC_i$) used for the encryption of said sequence of encrypted data packets;
e) second means of generation, for generating the same cryptographic sequence ($SC_i$) on the basis of the initialization vector value generated by said first means of generation;
f) means of shifting for shifting the cryptographic sequence generated by said second means of generation, as a function of said cryptographic synchronization delay information cue ($\Delta 1_j$); and

g) means for decrypting said sequence of encrypted data packets ($c_i$) on the basis of said shifted cryptographic sequence.

23. Decryption device according to claim 22, wherein said first means of generation comprise means for deriving the value ($IV_i$) of the initialization vector from the value of the cryptographic synchronization information cue ($CSI_i$) received by the means of reception.

24. Decryption device according to claim 22, wherein, in the absence of receipt of the value of the cryptographic synchronization information cue ($CSI_i$) by said first means of reception, said first means of generation comprise means (67) for generating the value ($IV_i$) of the initialization vector with the aid of a "freewheel" algorithm on the basis of an earlier value of the cryptographic synchronization information cue.

25. Decryption device according to any of claims 22 to 24, wherein, the cryptographic synchronization delay information cue ($\Delta 1_i$) being expressed as a number of time slots, said means of shifting comprise means for generating a corresponding information cue ($\Delta 2_i$) expressed as a number of data packets.

26. Decryption device according to any of claims 22 to 24, further comprising means for, upon a change of cell of the receiver mobile terminal from a determined source cell (A) to a determined target cell (B):

> h) receiving a cryptographic synchronization shift information cue ($\Delta_{CPT}$), relating to the cryptographic synchronization shift between the source cell and the target cell, which is transmitted with the change of cell command in a determined time slot of the second type over the transmission channel allocated to the communication in the source cell;
> i) storing the value of a first determined cryptographic synchronization information cue ($CSI_i$) and a first value ($CB_i$) of the target cell's time slot counter corresponding to the time slot of the second type in which the cryptographic synchronization information cue could have been received;
> j) performing the change of cell;
> k) receiving a determined sequence of encrypted data packets ($c_j$), on the basis of a determined time slot of the first type (24) over the transmission channel allocated to the communication in the target cell; and,
> l) in the absence of receipt by said first means of reception of the value of a second cryptographic synchronization information cue ($CSI_j$), to be used for the decryption of the sequence of encrypted data packets ($c_j$), determining the value of the second cryptographic synchronization information cue ($CSI_j$), as well as the value of the corresponding associated cryptographic synchronization delay information cue ($\Delta 1_j$) on the basis of the first value ($CB_i$) of the counter of time slots in the target cell, of the value of said first cryptographic synchronization information cue ($CSI_i$), and furthermore of a second value ($CB_j$) of the counter of time slots in the target cell corresponding to the time slot of the second type in which the second cryptographic synchronization information cue ($CSI_j$) could have been received over the transmission channel allocated to the communication in the target cell.

27. Mobile terminal of a digital radiocommunication system, including a transmission device according to any of claims 14 to 21, and/or a decryption device according to any of claims 22 to 26.

**Patentansprüche**

1. Chiffriertes Datenübertragungsverfahren zwischen einem mobilen Senderterminal (MTE) und wenigstens einem mobilen Empfängerterminal (MTR) eines digitalen Funkkommunikationssystems über einen Funkübertragungskanal mit einer Rasterstruktur, in der ein Raster TMA Zeitintervalle (T) eines ersten Typs umfasst, der einen Verkehrskanal für die Übertragung von Verkehrsinformationen bildet, und wenigstens ein Zeitintervall (S) eines zweiten Typs, der einen für die Übertragung von Signalgebungsinformationen zugeordneten Signalgebungskanal bildet, nach dem eine Sequenz ($c_i$) von chiffrierten Datenpaketen in dem Verkehrskanal ausgehend von einem Zeitintervall des ersten bestimmten Typs (14, 32) übertragen wird, während eine zugeordnete kryptographische Synchronisationsinformation ($CSI^*_i$) in dem zugeordneten Signalgebungskanal im Innern eines Zeitintervalls vom bestimmten zweiten Typ (18, 36) zugeordnet ist, und nach dem eine Verzögerungsinformation ($\Delta 1_j$) der kryptographischen Synchronisation relativ zum zeitlichen Abstand zwischen dem genannten Zeitintervall des bestimmten zweiten Typs und dem genannten Zeitabstand des bestimmten ersten Typs ebenfalls in dem zugeordneten Signalgebungskanal übertragen wird.

**2.** Übertragungsverfahren gemäß Anspruch 1, nach dem der Wert der kryptographischen Synchronisationsinformation von dem Wert eines Initialisierungsvektors ($IV_i$) abgeleitet wird, der zur Erzeugung einer kryptographischen Sequenz ($SC_i$) gedient hat, die für die Chiffrierung der genannten Sequenz von chiffrierten Datenpaketen verwendet wird.

**3.** Übertragungsverfahren gemäß Anspruch 2, nach dem die Länge der kryptographischen Sequenz gleich einer bestimmten ganzen Zahl N von Bits ist, die der Zahl der nützlichen Bits entsprich, die zwischen zwei aufeinander folgenden Zeitintervallen des zweiten Typs übertragen werden, in denen eine kryptographische Synchronisationsinformation übertragen werden kann.

**4.** Übertragungsverfahren gemäß Anspruch 3, nach dem die Zahl N ein ganzes Vielfaches einer bestimmten ganzen Zahl M ist, die der Anzahl von Bits eines chiffrierten Datenpakets entspricht.

**5.** Übertragungsverfahren gemäß einem der voranstehenden Ansprüche, nach dem die genannte Verzögerungsinformation der kryptographischen Synchronisation die Anzahl der Zeitintervalle vom ersten Typ ist, die das genannte Zeitintervall des bestimmten ersten Typs und das genannte Zeitintervall des bestimmten zweiten Typs trennt.

**6.** Übertragungsverfahren gemäß einem der voranstehenden Ansprüche, nach dem die genannte Verzögerungsinformation der kryptographischen Synchronisation im Innern des genannten Zeitintervalls mit der genannten kryptographischen Synchronisationsinformation vom zweiten Typ übertragen wird.

**7.** Übertragungsverfahren gemäß einem der voranstehenden Ansprüche, nach dem das genannte Zeitintervall vom bestimmten zweiten Typ (18, 36) das Zeitintervall des zweiten Typs ist, das in die Rasterstruktur direkt davor kommt, oder das erste Zeitintervall vom zweiten Typ, das in die Rasterstruktur nach dem genannten Zeitintervall vom bestimmten ersten Typ (14, 32) kommt.

**8.** Übertragungsverfahren gemäß einem der voranstehenden Ansprüche, nach dem der Wert der kryptographischen Synchronisationsinformation zu Beginn des Rotationsprinzips auf einen bestimmten kodierten Wert von einer bestimmten ganzen Zahl Q von Bits initialisiert wird und als binäre Verkettung einer bestimmten ganzen Zahl Q1 von ersten Bits erhalten wird, die einerseits einen zufälligen Wert kodieren und andererseits einer bestimmten ganzen Zahl Q2 von zweiten Bits, die die Bits mit dem geringsten Gewicht des Wertes eines Zeitintervallzählers andererseits sind, wobei Q, Q1 und Q2 bestimmte ganze Zahlen sind.

**9.** Dechiffrierungsverfahren einer Sequenz von chiffrierten Datenpaketen ($c_i$), die zwischen einem mobilen Senderterminal (MTE) und wenigstens einem mobilen Empfängerterminal (MTR) eines digitalen Funkkommunikationssystems über einen Funkübertragungskanal mit einer Rasterstruktur übertragen wird, in der ein Raster TDMA Zeitintervalle (T) eines ersten Typs umfasst, die einen Verkehrskanal für die Übertragung von Verkehrsinformationen bilden, und wenigstens einen Zeitintervall (S) eines zweiten Typs, der einen für die Übertragung von Signalgebungsinformationen zugeordneten Signalgebungskanal bildet, umfassend die Stufen, bestehend aus:

    a) Empfang der genannten Sequenz von chiffrierten Daten ausgehend von einem Zeitintervall des bestimmten ersten Typ (6, 15, 24, 33);
    b) Empfang einer im zugeordneten Signalgebungskanal zugeordneten kryptographischen Synchronisationsinformation ($CSI_i$) im Innern eines Zeitintervalls vom bestimmten zweiten Typ (18, 36), und
    c) Erhalt ebenfalls einer Verzögerungsinformation ($\Delta 1_i$) der kryptographischen Synchronisation relativ zum zeitlichen Abstand zwischen dem genannten Zeitintervall vom bestimmten zweiten Typ und des genannten Zeitintervalls vom bestimmten ersten Typ in dem zugeordneten Signalgebungskanal;
    d) Generieren eines Wertes ($IV_i$) eines Initialisierungsvektors, der zum Generieren einer kryptographischen Sequenz ($SC_i$) gedient hat, die zum Chiffrieren der genannten Sequenz von chiffrierten Datenpaketen verwendet wird;
    e) Generieren derselben kryptographischen Sequenz ($SC_i$) ausgehend von dem Wert des in der Stufe d) generierten Initialisierungsvektors;
    f) Verschieben der in der Stufe e) generierten kryptographischen Sequenz in Abhängigkeit von der genannten Verzögerungsinformation ($\Delta 1_i$) der kryptographischen Synchronisation; und
    g) Dechiffrieren der genannten Sequenz von chiffrierten Datenpaketen ($c_i$) ausgehend von der genannten verschobenen kryptographischen Sequenz.

**10.** Dechiffrierungsverfahren gemäß Anspruch 9, nach dem in der Stufe d) der Wert ($IV_i$) des Initialisierungsvektors von dem Wert der in der Stufe b) empfangenen kryptographischen Synchronisationsinformation ($CS_i$) abgeleitet ist.

**11.** Dechiffrierungsverfahren gemäß Anspruch 9, nach dem bei Ausbleiben des Empfangs des Wertes der kryptographischen Synchronisationsinformation (CSi) gemäß der Stufe b) der Wert ($IV_i$) des Initialisierungsvektors in der Stufe d) anhand eines "Freilauf"-Algorithmus ausgehend von einem vorherigen Wert der kryptographischen Synchronisationsinformation generiert wird.

**12.** Dechiffrierungsverfahren gemäß einem der voranstehenden Ansprüche 9 bis 11, nach dem die Stufe f) das Generieren einer entsprechenden, in der Anzahl von Datenpaketen ausgedrückten entsprechenden Information ($\Delta2_i$) umfasst, wenn die Verzögerungsinformation ($\Delta1_i$) der kryptographischen Information in einer Anzahl von Zeitintervallen ausgedrückt ist.

**13.** Dechiffrierungsverfahren gemäß Anspruch 9 bis 12, nach dem bei einer Zellenänderung des mobilen Empfängerterminals einer bestimmten Quellzelle (A) auf eine bestimmte Zielzelle (B) das mobile Empfängerterminal:

h) eine Verschiebungsinformation der kryptographischen Synchronisation ($\Delta_{CPT}$) relativ zur kryptographischen Synchronisationsverschiebung zwischen der Quellzelle und der Zielzelle empfängt, die mit dem Befehl der Zellenänderung in einem Zeitintervall vom bestimmten zweiten Typ auf den Übertragungskanal übertragen wird, der der Kommunikation in der Quellzelle zugeordnet ist;
i) den Wert einer ersten bestimmten kryptographischen Synchronisationsinformation ($CSI_i$) und einen ersten Wert ($CB_i$) des Zählers von Zeitintervallen der Zielzelle, die dem Zeitintervall vom zweiten Typ speichert, in dem die genannte kryptographische Synchronisationsinformation hätte empfangen werden können;
j) die Zellenänderung durchführt;
k) eine bestimmte Sequenz von chiffrierten Datenpaketen ($c_j$) ausgehend von einem Zeitintervall vom bestimmten ersten Typ (24) auf dem Übertragungskanal empfängt, der in der Zielzelle der Kommunikation zugeordnet ist; und,
l) bei Ausbleiben des Empfangs gemäß der Stufe b) des Wertes einer zweiten kryptographischen Synchronisationsinformation ($CSI_i$), die zum Dechiffrieren der genannten Sequenz von chiffrierten Datenpaketen ($c_j$) zu verwenden ist, den Wert der genannten zweiten kryptographischen Synchronisationsinformation ($CSI_i$) sowie ausgehend von dem genannten ersten Wert ($CB_i$) des Zählers von Zeitintervallen in der Zielzelle den Wert der zugeordneten entsprechenden Verzögerungsinformation der kryptographischen Synchronisation ($\Delta1_i$) des Wertes der genannten ersten kryptographischen Synchronisationsinformation ($CSI_i$) und darüber hinaus eines zweiten Wertes ($CB_i$) des Zählers von Zeitintervallen in der Zielzelle, die dem Zeitintervall vom zweiten Typ entspricht, in dem die genannte zweite kryptographische Synchronisationsinformation ($CSI_i$) auf dem Übertragungskanal hätte empfangen werden können, der der Kommunikation in der Zielzelle zugeordnet ist, bestimmt.

**14.** Vorrichtung zur Übertragung von chiffrierten Daten zwischen einem mobilen Senderterminal (MTER) und wenigstens einem mobilen Empfängerterminal (MTR) eines digitalen Funkkommunikationssystems über einen Funkübertragungskanal mit einer Rasterstruktur, in der ein Raster TDMA Zeitintervallen (T) eines ersten Typs entspricht, der einen Verkehrskanal für die Übertragung von Verkehrsinformationen und wenigstens ein Zeitintervall (S) eines zweiten Typs, der einen Signalgebungskanal, der für die Übertragung von Signalgebungsinformationen zugeordnet ist, umfasst, umfassend:

- Mittel zur Übertragung einer Sequenz ($c_i$) von chiffrierten Datenpaketen im Verkehrskanal ausgehend von einem Zeitintervall vom bestimmten ersten Typ (14, 32) und zur Übertragung einer kryptographischen Synchronisationsinformation ($CSI_i$), die in dem Signalgebungskanal zugeordnet ist, der im Innern eines Zeitintervalls vom bestimmten zweiten Typ (18, 36) zugeordnet ist, und
- Mittel zur Übertragung einer Verzögerungsinformation ($\Delta1_i$) der kryptographischen Synchronisation relativ zum zeitlichen Abstand zwischen dem genannten Zeitintervall vom bestimmten zweiten Typ und dem genannten Zeitintervall vom bestimmten ersten Typ, ebenfalls in dem zugeordneten Signalgebungskanal.

**15.** Vorrichtung zur Übertragung gemäß Anspruch 14, darüber hinaus umfassend Mittel zur Ableitung des Wertes der kryptographischen Synchronisationsinformation des Wertes eines Initialisierungsvektors ($IV_i$), der zum Generieren einer kryptographischen Sequenz ($SC_i$) gedient hat, die zum Chiffrieren der genannten Sequenz von chiffrierten Datenpaketen verwendet wird.

**16.** Vorrichtung zur Übertragung gemäß Anspruch 15, in dem die Länge der kryptographischen Sequenz gleich einer bestimmten ganzen Zahl N von Bits ist, die der Anzahl der nützlichen Bits entspricht, die zwischen zwei aufeinander folgenden Zeitintervallen vom zweiten Typ übertragen werden, in denen eine kryptographische Synchronisationsinformation übertragen werden kann.

**17.** Vorrichtung zur Übertragung gemäß Anspruch 16, nach der die Zahl N ein ganzes Vielfaches einer bestimmten ganzen Zahl M ist, die einer Zahl von Bits eines chiffrierten Datenpakets entspricht.

**18.** Vorrichtung zur Übertragung gemäß Anspruch 14 bis 17, in der die genannte Verzögerungsinformation der kryptographischen Synchronisation die Anzahl der Zeitintervalle vom ersten Typ ist, die das genannte Zeitintervall vom bestimmten ersten Typ und das genannte Zeitintervall vom bestimmten zweiten Typ trennt.

**19.** Vorrichtung zur Übertragung gemäß Anspruch 14 bis 18, in der die genannte Verzögerungsinformation der kryptographischen Synchronisation innerhalb des genannten Zeitintervalls vom bestimmten zweiten Typ mit der genannten kryptographischen Synchronisationsinformation übertragen wird.

**20.** Vorrichtung zur Übertragung gemäß Anspruch 14 bis 19, in der das genannte Zeitintervall vom bestimmten zweiten Typ (18, 36) das Zeitintervall vom zweiten Typ, das in die Rasterstruktur direkt davor kommt, oder das erste Zeitintervall vom zweiten Typ, das nach dem genannten Zeitintervall vom bestimmten ersten Typ (14, 32) in die Rasterstruktur kommt, bestimmt.

**21.** Vorrichtung zur Übertragung gemäß Anspruch 14 bis 20, umfassend Mittel, um, zu Beginn des Rotationsprinzips, den Wert der kryptographischen Synchronisationsinformation auf einen bestimmten Wert zu initialisieren, der auf eine bestimmte ganze Zahl Q von Bits kodiert ist und als binäre Verkettung einer bestimmten ganzen Zahl Q1 von ersten Bits erhalten wird, die einen zufälligen Wert einerseits kodieren, und einer bestimmten ganzen Zahl Q2 von zweiten Bits, die die Bits mit geringem Gewicht des Wertes eines Zählers des Zeichenintervalls andererseits sind, bei denen Q, Q1 und Q2 bestimmte ganze Zahlen sind.

**22.** Dechiffrierungsvorrichtung einer Sequenz von chiffrierten Paketdaten (ci), die zwischen einem mobilen Senderterminal (MTE) und wenigstens einem mobilen Empfängerterminal (MTR) eines digitalen Funkkommunikationssystems über einen Funkübertragungskanal mit einer Rasterstruktur, in der ein Raster TDMA Zeitintervalle (T) einer ersten Typs umfasst, der einen Verkehrskanal für die Übertragung von Verkehrsinformationen bildet, und wenigstens ein Zeitintervall (S) eines zweiten Typs, der einen zugeordneten Signalgebungskanal für die Übertragung von Signalgebungsinformationen bildet, übertragen wird, umfassend:

a) erste Empfangsmittel zum Empfang der genannten Sequenz an chiffrierten Datenpaketen ausgehend von einem Zeitintervall vom bestimmten ersten Typ (6, 15, 24, 33);
b) zweite Empfangsmittel zum Empfang einer zugeordneten kryptographischen Synchronisationsinformation (CSIi) im zugeordneten Signalgebungskanal im Innern eines Zeitintervalls vom bestimmten zweiten Typ (18, 36), und
c) Empfangsmittel, um ebenfalls im zugeordneten Signalgebungskanal eine Verzögerungsinformation ($\Delta 1_j$) der kryptographischen Synchronisation relativ zum zeitlichen Abstand zwischen dem genannten Zeitintervall vom bestimmten zweiten Typ und dem genannten Zeitintervall vom bestimmten ersten Typ zu empfangen;
d) erste Generierungsmittel zum Generieren eines Wertes ($IV_i$) eines Initialisierungsvektors, der zum Generieren einer kryptographischen Sequenz ($SC_i$) gedient hat, die zum Chiffrieren der genannten Sequenz von chiffrierten Datenpaketen verwendet wird;
e) zweite Generierungsmittel zum Generieren derselben kryptographischen Sequenz (SCi) ausgehend von dem durch die genannten ersten Generierungswerte generierten Wert des Initialisierungsvektors;
f) Verschiebungsmittel, um die kryptographische Sequenz, die durch die genannten zweiten Erzeugungsmittel generiert wurde, in Abhängigkeit von der genannten Verzögerungsinformation ($\Delta 1_j$) der kryptographischen Synchronisation zu verschieben; und
g) Mittel zum Dechiffrieren der genannten Sequenz an chiffrierten Datenpakten ($c_i$) ausgehend von der genannten verschobenen kryptographischen Sequenz.

**23.** Dechiffrierungsvorrichtung gemäß Anspruch 22, bei der die genannten ersten Generierungsmittel Mittel umfassen, um den Wert ($IV_i$) des Initialisierungsvektors des Wertes der kryptographischen Synchronisationsinformation ($CS_i$) abzuleiten, der von den genannten Empfangsmitteln empfangen wird.

**24.** Dechiffrierungsvorrichtung gemäß Anspruch 22, nach der bei Ausbleiben des Empfangs des Wertes der kryptographischen Synchronisationsinformation ($CSI_i$) durch die genannten ersten Empfangsmittel die genannten ersten Generierungsmittel Mittel (67) umfassen, um den Wert ($IV_i$) des Initialisierungsvektors mithilfe eines "Freilauf"-Algorithmus ausgehend von einem vorherigen Wert der kryptographischen Synchronisationsinformation zu erzeugen.

**25.** Dechiffrierungsvorrichtung gemäß Anspruch 22 bis 24, in der die genannten Verschiebungsmittel, wenn die Verzögerungsinformation ($\Delta 1_i$) der kryptographischen Synchronisation in einer Anzahl von Zeitintervallen ausgedrückt wird, Mittel umfassen, um eine entsprechende Information ($\Delta 2_i$) zu generieren, die in einer Anzahl von Datenpaketen ausgedrückt wird.

**26.** Dechiffrierungsvorrichtung gemäß Anspruch 22 bis 24, die darüber hinaus Mittel umfasst, um bei einer Zellenänderung des mobilen Empfängerterminals einer bestimmten Quellzelle (A) auf eine bestimmte Zielzelle (B):

h) eine Verschiebungsinformation der kryptographischen Synchronisation ($\Delta_{CPT}$) relativ zur kryptographischen Synchronisation zwischen der Quellzelle und der Zielzelle, die mit dem Zellenänderungsbefehl in einem Zeitintervall vom bestimmten zweiten Typ auf dem der Kommunikation in der Quellzelle zugeordneten Übertragungskanal übertragen wird, zu empfangen;

i) den Wert einer bestimmten ersten kryptographischen Synchronisationsinformation ($CS_i$) und einen ersten Wert ($CB_i$) des Zählers von Zeitintervallen zu zählen, die dem Zeitintervall des zweiten Typs entspricht, in dem die genannte kryptographische Synchronisationsinformation hätte empfangen werden können;

j) die Zellenänderung durchzuführen;

k) eine bestimmte Sequenz von chiffrierten Datenpaketen ($c_i$) ausgehend von einem Zeitintervall vom bestimmten ersten Typ (24) auf dem Übertragungskanal zu empfangen, der der Kommunikation in der Zielzelle zugeordnet ist; und

l) bei Ausbleiben eines Empfangs durch die genannten ersten Empfangsmittel des Wertes einer zweiten kryptographischen Synchronisationsinformation ($CS_j$), die zum Dechiffrieren der genannten Paketsequenz von chiffrierten Daten ($c_j$) zu verwenden ist, den Wert der genannten zweiten kryptographischen Synchronisationsinformation ($CSI_j$) sowie den Wert der Verzögerungsinformation der entsprechenden zugeordneten kryptographischen Synchronisation ($\Delta 1_j$) ausgehend von dem genannten ersten Wert ($CB_i$) des Zeitintervallzählers in der Zielzelle, des Wertes der genannten ersten kryptographischen Synchronisationsinformation ($CSI_j$) und darüber hinaus eines zweiten Wertes ($CB_j$) des Zählers von Zeitintervallen in der Zielzelle; die dem Zeitintervall des zweiten Typs entspricht, in dem die genannte zweite kryptographische Synchronisationsinformation ($CSI_j$) auf dem Übertragungskanal hätte empfangen werden können, der der Kommunikation in der Zielzelle zugeordnet ist, zu bestimmen.

**27.** Mobiles Terminal eines digitalen Funkkommunikationssystems, umfassend eine Übertragungsvorrichtung gemäß Anspruch 14 bis 21 und / oder eine Vorrichtung zum Dechiffrieren gemäß Anspruch 22 bis 26.

**FIG. 1**

**FIG. 6**

**FIG. 7**

**FIG. 12**

d2   d1

fTD | 1 T | 2 T | 3 T | 4 T | 5 T | 6 T | 7 T | 8 T | 9 S |

fTU | 1 T | 2 T | 3 T | 4 T | 5 T | 6 T | 7 T | 8 T | 9 S |

fTD | 10 T | 11 T | 12 T | 13 T | 14 T | 15 T | 16 T | 17 T | 18 S |

fTU | 10 T | 11 T | 12 T | 13 T | 14 T | 15 T | 16 T | 18 T | 18 S |

fTD | 19 T | 20 T | 21 T | 22 T | 23 T | 24 T | 25 T | 26 T | 27 S |

fTU | 19 T | 20 T | 21 T | 22 T | 23 T | 24 T | 25 T | 26 T | 27 S |

fTD | 28 T | 29 T | 30 T | 31 T | 32 T | 33 T | 34 T | 35 T | 36 S |

fTU | 28 T | 29 T | 30 T | 31 T | 32 T | 33 T | 34 T | 35 T | 36 S |

**FIG. 2**

EP 1 525 707 B1

| P1 | P2 | P3 | P4 | P5 | P6 | P7 | P8 | P9 | P10 | P11 | P12 | P13 | P14 | P15 | P16 | P17 | P18 |
|----|----|----|----|----|----|----|----|----|-----|-----|-----|-----|-----|-----|-----|-----|-----|

| T1 | T2 | T3 | T4 | T5 | T6 | T7 | T8 | T9 |
|----|----|----|----|----|----|----|----|----|

**FIG. 3a**

| Intervalles de Temps | 1ère trame de Phonie | 2ème trame de Phonie | 3ème trame de Phonie |
|----------------------|----------------------|----------------------|----------------------|
| 1, 10, 19, 28 | P1 | P2 | ¼ de P3 |
| 2, 11, 20, 29 | ¾ de P3 | P4 | ½ de P5 |
| 3, 12, 21, 30 | ½ de P5 | P6 | ¾ de P7 |
| 4, 13, 22, 31 | ¼ de P7 | P8 | P9 |
| 5, 14, 23, 32 | P10 | P11 | ¼ de P12 |
| 6, 15, 24, 33 | ¾ de P12 | P13 | ½ de P14 |
| 7, 16, 25, 34 | ½ de P14 | P15 | ¾ de P16 |
| 8, 17, 26, 35 | ¼ de P16 | P17 | P18 |

**FIG. 3b**

| $\Delta 1_i$ : | 7 | 6 | 5 | 4 | 3 | 2 | 1 | 0 |
|----------------|---|---|---|---|---|---|---|---|
| $\Delta 2_i$ : | 15 | 13 | 11 | 9 | 6 | 4 | 2 | 0 |

**FIG. 11**

FIG. 4

FIG. 5

DÉBUT

GÉNÉRATION $IV_i$ ET $CSI_i$ — 71

$SC_i = E_K (IV_i)$ — 72

$c_i = m_i \oplus SC_i$ — 73

$i = 0$ ?

OUI

NON

TRANSMISSION $CSi_0$ DANS TCH — 74

TRANSMISSION $c_i$ DANS TCH — 76

TRANSMISSION $c_i$ DANS TCH — 75

ÉMISSION $CSI_i$ ?

OUI

NON

TRANSMISSION $CSI_i$ ET $\Delta1_i$ DANS SACCH — 77

AUTRE SÉQUENCE ?

OUI

NON

FIN

**FIG. 8**

Traffic

Signalisation
associée

Demande
d'alternat

Synchronisation
cryptographique
initiale

Synchronisation
cryptographique
périodique

Autre canal

Voie descendante

Voie montante

$C_0$

$C_1$

$C_2$

$C_3$

TCH          SACCH

FIG. 9

Legend:
- Traffic
- Signalisation associée
- Demande d'alternat
- Synchronisation cryptographique initiale
- Synchronisation cryptographique périodique
- Autre canal
- ↓ Voie descendante
- ↑ Voie montante

TCH      SACCH

```
                         ┌─────────┐
                         │  DÉBUT  │
                         └─────────┘
                              │
                              ▼
              ┌──────────────────────────────┐
              │        RÉCEPTION  c_i         │────81
              └──────────────────────────────┘
                              │
                              ●──────────────────────────────┐
                              ▼                               │
                   NON    ◇ 82                                │
            ┌ ─ ─ ─ ─ ◇ RÉCEPTION CSI_i ◇ OUI                │
            │         ◇   ET Δ1_i ?    ◇───┐                 │
            ▼              ◇                │                 │
  ┌──────────────────────┐      ┌──────────────────────┐     │
  │    GÉNÉRATION IVi     │      │    GÉNÉRATION IVi     │─83  │
  │ PAR MODULE "ROUE LIBRE"│─84  │   A PARTIR DE CSI_i   │     │
  └──────────────────────┘      └──────────────────────┘     │
            │                          │                      │
            └──────────●───────────────┘                      │
                       │                                      │
                       ▼                                      ▼
           ┌──────────────────┐        ┌──────────────────────┐
           │  SC_i = E_K (IV_i)│─85     │    GÉNÉRATION Δ2_i    │
           └──────────────────┘        │   A PARTIR DE Δ1_i    │
                       │               └──────────────────────┘
                       ▼                          │     86
           ┌──────────────────┐                   │
           │  m_i = c_i ⊕ SC_i │◄──────────────────┘
           └──────────────────┘
                    │    87
                    ▼
              ┌─────────┐
              │   FIN   │
              └─────────┘
```

**FIG. 10**

34

**FIG. 13**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0446194 A
- US 4757536 A
- US 20020066013 A